# EUROPÄISCHE PATENTSCHRIFT

(11) **EP 0 603 520 B1**
(45) Veröffentlichungstag und Bekanntmachung des Hinweises auf die Patenterteilung: **23.09.1998**
(21) Anmeldenummer: 93118029.3
(22) Anmeldetag: 06.11.1993
(51) Int. Cl.: B60N 2/28

(54) **Kinder-Sicherheitssitz**
Safety seat for child
Siège de sécurité pour enfant

(30) Priorität: 22.12.1992 DE 9217550 U
(43) Veröffentlichungstag der Anmeldung: 29.06.1994
(73) Patentinhaber: Schräder, Margarete, D-95352 Marktleugast (DE)
(72) Erfinder: Schräder, Margarete, D-95352 Marktleugast (DE)
(74) Vertreter: Tergau, Enno, Dipl.-Ing.

(56) Entgegenhaltungen:
- EP-A- 0 164 909
- EP-A- 0 485 121
- DE-A- 2 936 995
- DE-A- 3 422 695
- US-A- 4 729 600
- US-A- 4 743 064

## Beschreibung

Die Erfindung betrifft einen Sicherheitssitz für Kinder gemäß dem Oberbegriff des Anspruchs 1.

Aus der US-A-4 861 105 ist beispielsweise ein solcher Sicherheitssitz für Kinder zur Montage an einem Fahrzeugsitz bekannt, wobei am Sicherheitssitz mindestens eine Schwenkstütze zwischen einer deren Schwenkweg sitzseitig begrenzenden Ruhestellung und wenigstens einer Schwenkstellung verschwenkbar angebracht ist, in der der Sicherheitssitz zumindest teilweise über die Schwenkstütze abstützbar ist. Bei dem hier beschriebenen Sicherheitssitz dient die Schwenkstütze dazu, ein Schaukeln oder Wippen des mit einer gekrümmten Unterseite versehenen Sitzes zu verhindern.

Ähnliche, gattungsgemäße Autokindersitze sind in DE-U-1 745 401 und US-A-4 640 545 sowie US-A-4 033 622 und US-A-4 456 302 beschrieben wobei die jeweiligen Schwenkstützen gemäß den ersten beiden Schriften den Kindersitz vorne auf bzw. vor dem Fahrzeugsitz abstützen, damit der Kindersitz überhaupt in seiner Gebrauchslage bleibt, und gemäß den zweiten beiden Schriften zwischen zwei Schwenkstellungen verstellbar sind, um eine mehr aufrechte und eine mehr liegende Sitzposition einstellen zu können.

Diese Sicherheitssitze haben alle den Nachteil, daß sie durch die ausschließliche Befestigung im Bereich der Fahrzeugsitz-Rückenlehne mit dem Fahrzeuggurtsystem bei einem Stoß von hinten, wie bei einem Auffahrunfall oder einem Stoß von schräg vorne, wie bei sogenannten "11- oder 13-Uhr"-Unfällen insgesamt um eine quer zur Fahrtrichtung verlaufende Horizontalachse bzw. eine Vertikalachse kippen können. Dies kann auch bei Überschlägen des Fahrzeugs oder bereits bei rascher Kurven- oder Rückwärtsfahrt passieren. Dadurch werden in derart montierten Sicherheitssitzen sitzende Kinder einerseits mitsamt dem Sicherheitssitz der entsprechenden Beschleunigung ausgesetzt und können andrerseits im Verlauf des Kippens oder Drehens durch andere Gegenstände im Fahrzeug verletzt werden.

Die gegenüber dem Prioritätstag der vorliegenden Anmeldung nachveröffentlichte DE-C-4 137 575 (C1) offenbart ein Kindersitzsystem für ein Kraftfahrzeug, wobei zunächst ein Basisteil fest und dauerhaft mit dem Fahrzeugsitz verbunden wird und anschließend verschiedene eigentliche Sitze aufnehmen kann. Das Basisteil besteht aus miteinander unter Verrastung zusammensteckbaren vorderen und hinteren Klemmteilen sowie einem Mittelteil, das auf der Fahrzeugsitz-Sitzfläche aufliegt. Das hintere Klemmteil wird teilweise zwischen dem Fahrzeugsitz-Sitzkissen und der daran anschließenden Fahrzeugsitz-Rückenlehne hindurchgeschoben und mit dem Mittelteil verbunden, wobei ein Teil des hinteren Klemmteils die Fahrzeugsitz-Rückenlehne hintergreift. Das vordere Klemmteil wird von der vorderen Kante des Fahrzeugsitz-Sitzkissens her mit dem Mittelteil verbunden und hintergreift diese Kante. Das so montierte Basisteil ist im wesentlichen unverrückbar an dem Fahrzeugsitz befestigt und kann mit verschiedenen Sitzmodulen zum Sicherheitssitz ausgebaut werden.

Durch die Verwendung des Basisteils ist dieser bekannte Kindersitz in nachteiliger Weise sehr aufwendig zu montieren und handzuhaben, muß für jede Sitzform und -abmessung gesondert hergestellt werden und benötigt viel Platz zum Aufbewahren z. B. in einem Fahrzeugkofferraum. Aus diesen Gründen ist eine Demontage des Basisteils häufig nicht möglich, so daß auch bei nicht benötigtem Kindersitz der entsprechend mit dem Basisteil ausgerüsteten Fahrzeugsitzplatz nicht für andere Passagiere benutzt werden kann. Weiterhin ist diese aufwendige Konstruktion mit hohen Kosten verbunden und kann nicht auch außerhalb des Fahrzeuges für das Kind genutzt werden.

Aus US-A-4 743 064, DE-A-3 422 695 und DE-A-2 936 995 sind Kindersitze bekannt, an denen strebenartige Stützelemente schwenkbar befestigt sind. In seiner Gebrauchslage stützen sich diese Kindersitze mit Hilfe des Stützelementes auf der Sitzfläche eines Fahrzeugsitzes ab. Diese Abstützung bietet oftmals nur eine ungenügende Lagesicherung des Kindersitzes im Montagezustand.

Der Erfindung liegt die Aufgabe zugrunde, einen gattungsgemäßen Sicherheitssitz zu schaffen, der im montierten Zustand eine möglichst hohe Lagesicherheit bietet.

Diese Aufgabe wird durch die Merkmalskombination des Anspruches 1 gelöst.

Gemäß Anspruch 1 wird ein einfach zu montierender Sicherheitssitz geschaffen, der eine hohe Lagesicherheit bietet, da die Klemmstütze und/oder die Zentrierstütze zusätzlich zum Fahrzeuggurtsystem Kipp- und Drehbewegungen zumindest in gefährlichen Dimensionen verhindern oder bei sehr hohen Fahrzeugbeschleunigungen zumindest verringern kann. Dies führt zu einem besonders hohen Maß an Sicherheit. Die Schwenkbarkeit der Schwenkstützen ermöglicht dabei die Anpassung an unterschiedliche Fahrzeugsitze, was den Vorteil hat, daß der erfindungsgemäße Sicherheitssitz in jedem Fahrzeug optimal angebracht werden kann.

Die einfache Montage fördert in vorteilhafter Weise die Verwendung des Kindersitzes gemäß der Erfindung. Der Sicherheitssitz muß lediglich mit oder ohne Kind auf die Fahrzeugsitz-Sitzfläche gestellt werden, nachdem die Klemmstütze ausgeklappt wurde und/oder bevor die Zentrierstütze umgelegt wird, dann an die Fahrzeugsitz-Rückenlehne herangeschoben werden, so daß die Klemmstütze zumindest bereichsweise zwischen das Fahrzeugsitz-Sitzkissen und die daran anschließende Fahrzeugsitz-Rückenlehne eingreift bzw. die Zentrierstütze im vorderen Stirnbereich des Fahrzeugsitz-Sitzkissens wenigstens bereichsweise anliegt, und schließlich mittels des Fahrzeuggurtsystems befestigt werden, wobei ggf. die Halteeinrichtungen für die Schwenkstützen festgestellt werden müssen, wenn keine Einmaleinstellung oder bauartbedingte Einstellung paßt oder erhalten blieb. Der erfindungsgemäße Sicherheitssitz kann somit an beliebige Fahrzeugsitze angepaßt werden. Da es somit sehr einfach ist, den Kindersitz zu montieren und dabei eine hohe Sicherheit für das Kind erreicht wird, und da ferner für diese hohe Sicherheit kein so hoher Preis wie für wirkungsmäßig im Auto vergleichbare Systeme ausgegeben werden muß, wird der erfindungsgemäße Kindersitz häufiger verwendet, was ohnehin durch einige nationale Gesetze bereits vorgeschrieben ist.

Die erfindungsgemäß als Klemm- und/oder Zentrierstützen ausgebildeten Schwenkstützen schaffen den weiteren Vorteil, daß der Sicherheitssitz auch an Sitzen, die nicht mit einem eigenen Gurtsystem versehen sind, durch diese Stützen befestigt und gesichert werden kann, wie beispielsweise an Eisenbahnsitzen, so daß sich der Sicherheitssitz auch gut für Reisen eignet. Diese Befestigung reicht aus, um den Kindersitz in seiner aufgestellten Lage gegen fahrtypische und durch Bewegungen des Kindes verursachte Verlagerungen zu sichern. Werden die Schwenkstützen nicht benötigt, z. B. beim Tragen des Sitzes oder auf entsprechenden Unterlagen, so können die Schwenkstützen in ihre Ruheposition weggeklappt werden und stören oder schaden dann nicht.

Ferner hat der erfindungsgemäße Sicherheitssitz den Vorteil, daß er auch außerhalb von Fahrzeugen verwendet werden kann, wobei die Schwenkstützen auch hier zur Befestigung dienen können. Zu Hause oder insbesondere auf Reisen ersetzt der Sicherheitssitz den gesonderten Kinderstuhl, der unterwegs häufig nicht paßt, in einem unsicheren Zustand und meist nicht vorhanden ist. Je nach Ausbildung eines Sitzmöbels und des Sicherheitssitzes kann letzterer gemäß der vorliegenden Erfindung mit der Klemmstütze zwischen zwei Polster gesteckt oder mittels der Zentrierstütze an der Sitzflächenkante festgeklemmt werden. Insgesamt dienen die Schwenkstützen auch dazu, den Stand des Sicherheitssitzes zu verbessern und ggf. weitere Sitz- und Liegepositionen zu ermöglichen.

Besonders vorteilhaft ist bei dem Sicherheitssitz, daß die Schwenkausleger, wenn sie nicht benötigt werden, z. B. bei Verwendung des Sitzes als Baby- oder Kindertrage, oder, falls der Sitz entsprechend ausgebildet ist, beispielsweise als Schaukelwippe, in die Ruhestellung geschwenkt werden können und dann bei der entsprechenden Nutzung nicht hinderlich sind.

Der Sicherheitssitz ist üblicherweise so geformt, daß er der Oberflächenkontur von Sitzkissen und Rückenlehne des Fahrzeugsitzes angepaßt ist, um dort in formschlüssiger Anlage zu stehen. In dieser Sollstellung wird der Kindersitz durch das fahrzeugeigene Gurtsystem fixiert. Diesbezügliche Ausgestaltungen von Kindersitzen im allgemeinen sind Gegenstand von DE-U-92 08 053.7 und 92 08 778.7.

Vorteilhaft Ausgestaltungen und Weiterbildungen der Erfindung sind Gegenstand der Unteransprüche.

Durch ein am Sicherheitssitz vorgesehenes Rückhaltesystem, wie ein Gurtsystem oder ein Prallkörper, kann ein Kind vorteilhaft optimal gesichert werden.

In einer weiteren bevorzugten Ausgestaltung wird der Kinder-Sicherheitssitz insbesondere in der sogenannten Reboard-Stellung im Fahrzeug an einem Fahrzeugsitz angebracht. Es ist dies eine Stellung, bei der der Kopf des Kindes in Fahrtrichtung vorne liegt. Solche Sitzmontagen verwendet man für den Transport von Kleinstkindern, bei denen die Nackenmuskulatur noch nicht ausreichend entwickelt ist (dies ist in Deutschland beispielsweise als Gruppe Null für Fahrzeugkindersitze klassifiziert).

Gemäß einer weiteren bevorzugten Ausführungsform weist der Sicherheitssitz ein Tragegestell und eine Sitzschale auf. Dies hat den Vorteil, daß einerseits eine hohe Stabilität auch für verschiedene Verwendungen und andrerseits eine optimale Anpassung erreicht wird. Vorteilhafterweise kann der Sicherheitssitz durch sein Gestell mit dem Fahrzeuggurt fixiert werden.

Ferner ist bevorzugt eine Trageeinrichtung vorgesehen, die insbesondere einen vorzugsweise schwenkbar an dem Sicherheitssitz, bevorzugt ggf. an dem Tragegestell angebrachten Tragebügel enthält. Dadurch wird die Stabilität des Kindersitzes erhöht und dieser und ggf. ein darin befindliches Kind können bequem für den Träger und das Kind transportiert werden, das bei weggeschwenktem Tragebügel einfach und ohne Verletzungsrisiko hineingesetzt und herausgenommen werden kann. Der Tragebügel kann ferner vorteilhaft in die Befestigung des Sitzes im Auto eingebunden werden.

Damit die Befestigung des Sicherheitssitzes an dem Fahrzeugsitz fest und sicher ist, sind nach einer vorteilhaften Ausgestaltung an dem Sicherheitssitz und insbesondere ggf. an dem Tragegestell und/oder der Sitzschale zur Montage an dem Fahrzeugsitz Gurtführungen zur Aufnahme eines Fahrzeuggurtsystems vorgesehen. Dadurch wird zum einen eine Positionierhilfe für das Fahrzeuggurtsystem und zum anderen dafür eine Sicherung erreicht.

Bei einer bevorzugten vorteilhaften Ausführungsform des erfindungsgemäßen Sicherheitssitzes sind das Tragegestell und die Sitzschale zweiteilig ausgebildet, wobei bevorzugt das Tragegestell aus Metall oder Verbundmaterial, insbesondere Metall- oder Verbundrohrmaterial, und die Sitzschale aus Kunststoff oder Verbundmaterial bestehen. Dabei enthält, falls vorhanden, der Tragebügel Metall- oder Verbundrohrmaterial. Die Sitzschale kann in zumindest zwei, insbesondere fixierbare Sitzpositionen schwenkbar an dem Tragegestell gelagert sein, was für einen Kindersitz prinzipiell aus der EP 195 037 B1 bekannt ist. Dadurch kann das Kind in Sitzstellungen und in beliebig geneigten Liegestellungen transportiert werden.

Alternativ können auch das Tragegestell und die Sitzschale integral ausgebildet sein und insbesondere aus Kunststoff oder Verbundmaterial bestehen, wobei ein evtl. vorhandener Tragebügel aus Kunststoff oder Verbundmaterial besteht. Dabei kann der Sicherheitssitz durch Verstelleinrichtungen in zumindest zwei, insbesondere fixierbare Sitzpositionen verstellbar sein, was beispielsweise mittels mindestens einer Schwenkstütze und/oder einer insbesondere stufenlos längeneinstellbaren Stellstütze und/oder einer insbesondere stufenlos längeneinstellbaren Schwenkstütze vorzugsweise im Bereich des Vorderendes des Sicherheitssitzes erreicht werden kann. Eine Stellstütze kann beispielsweise eine ausziehbare Stütze oder eine extern einsetzbare Stütze sein.

Als weitere vorteilhafte Ausgestaltung des Sicherheitssitz nach der vorliegenden Erfindung kann vorgesehen werden, daß der Sicherheitssitz an seiner Unterseite zumindest bogenartige nach unten geformte Auflagen aufweist, die wenigstens bereichsweise mit einer Antirutschoberfläche versehen sein können. Besonders bevorzugt ist bei dieser Ausführungsform, daß die Auflagen durch seitliche Standkufen gebildet sind, die ggf. im Tragegestell enthalten sein können. Dadurch wird in einer einem Schaukelstuhl ähnlichen Weise eine Art Wippe geschaffen, die vorteilhaft im häuslichen Bereich für das Kind verwendet werden kann. Dies hat den Vorteil, daß der erfindungsgemäße Kindersitz noch vielfältiger eingesetzt werden kann. Damit der Wippbereich eingestellt oder das Wippen unterbunden werden kann, ist es lediglich erforderlich, die Schwenkstütze(n) entsprechend in Schwenkstellungen zu bringen, um den Wippbereich zu begrenzen bzw. das Wippen zu blockieren.

In einer bevorzugten Ausgestaltung ist (sind) die Schwenkstütze(n) als Draht- oder Rohrbügel ausgebildet, die vorzugsweise aus Metall, Kunststoff oder Verbundmaterial hergestellt sein können. Weiter ist es vorteilhaft, zumindest die Unterseite der Schwenkstütze(n) wenigstens bereichsweise mit einer Antirutschoberfläche zu versehen. Wenn die Schwenkstütze(n) einen U-förmigen Bügel enthält/enthalten, der beiderseits des Sicherheitssitzes, vorzugsweise, falls vorhanden am Tragegestell über seine/ihre Schenkelenden schwenkbar angebracht ist, ist/sind die Schwenkstütze(n) besonders stabil und auch leicht herzustellen. Ferner ist bevorzugt, daß die Schwenkstütze(n) im Bereich der Unterseite des Sicherheitssitzes und insbesondere ggf. am Tragegestell schwenkbar angebracht ist/sind.

Gemäß einer möglichen Weiterbildung ist bevorzugt, daß die Ruhestellung(en) der Schwenkstütze(n) zumindest im wesentlichen innerhalb der Kontur des Sicherheitssitzes liegt/liegen und bevorzugt ggf. mit den Standkufen ausgerichtet ist/sind. Daran ist vorteilhaft, daß die Schwenkstützen in ihren Ruhepositionen z. B. beim Tragen des Sicherheitssitzes nicht stören oder ein Verletzungsrisiko darstellen. Auch die Schwenkstützen selbst sind auf diese Weise vor Beschädigung geschützt.

Als weiteres Gestaltungsmerkmal kann vorgesehen werden, daß die mindestens eine Schwenkstütze in Richtung von ihrer Schwenkachse weg verlängerbar ist, insbesondere indem die Schwenkstütze einen ausziehbaren Aufsatz enthält, der bevorzugt ggf. bei U-förmiger Schwenkstütze ein taschenartiger Aufsatz ist, der vorzugsweise in unterschiedlichen Verlängerungsstellungen, insbesondere durch Reibschluß oder eine Verrastung an dem U-förmigen Bügel der Schwenkstütze fixierbar ist. Dadurch wird der Vorteil erreicht, daß eine Anpassung an unterschiedlichste Sitze beispielsweise verschiedener Fahrzeugmodelle, aber selbst Vorder- und Rücksitze in einem Fahrzeug in optimaler Weise gewährleistet ist, so daß der erfindungsgemäße Sicherheitssitz noch universeller einsetzbar ist.

In bevorzugten Ausgestaltungen der Klemmstütze ist eine einfache, sichere und vielfältige Anwendung des Sicherheitssitzes nach der Erfindung möglich. Dazu ist die Klemmstütze von ihrer Ruhestellung ausgehend nach unten in zumindest eine Schwenkstellung verschwenkbar. Bevorzugt ist dann, daß die Klemmstütze in der hinteren Hälfte und bevorzugt im Bereich des Hinterendes des Sicherheitssitzes schwenkbar angebracht ist, insbesondere in ihrer Ruhestellung ausgehend von ihrer Schwenkachse zumindest im wesentlichen zum Vorderende des Sicherheitssitzes weist und vorzugsweise in wenigstens eine zumindest im wesentlichen in Richtung des Hinterendes des Sicherheitssitzes weisende, stützende Schwenkstellung verschwenkbar ist, in der die Klemmstütze zumindest bereichsweise zwischen das Fahrzeugsitz-Sitzkissen und die daran anschließende Fahrzeugsitz-Rückenlehne einsetzbar ist. Diese Konstruktion ermöglicht ggf. auch eine einfache und wirksame Verhinderung einer Wippbewegung des Sicherheitssitzes.

Alternativ ist vorgesehen, daß die Klemmstütze in der vorderen Hälfte des Sicherheitssitzes an diesem, bevorzugt ggf. an dem Tragegestell schwenkbar angebracht und insbesondere durch einen U-förmigen Bügel gebildet ist, der wenigstens im wesentlichen bis zum Hinterende des Sicherheitssitzes reicht und bevorzugt diesen und/oder das Fahrzeugsitz-Sitzkissen dort umfaßt. Die Klemmstütze verläuft dabei in ihrer wirksamen Schwenkstellung besonders flach, wodurch sie einen stabilen Stand des Sicherheitssitzes gewährleistet, was dadurch weiter unterstützt wird, daß bei dieser Ausführungsform die Querstrebe des U-förmigen Bügels besonders lang ist und eine breite, gegen Verkippen sichere Standlinie bzw. Standfläche bildet. Beim Umgreifen des Fahrzeugsitz-Sitzkissens wird der Sicherheitssitz gleichsam an letzerem eingehängt, was eine besonders sichere Halterung ergibt.

Bei einer bevorzugten Ausführungsform enthalten die Halteeinrichtungen für die Klemmstütze ein Gegenlager am Sicherheitssitz, vorzugsweise ggf. am Tragegestell und insbesondere in Form einer bevorzugt hinteren Querstrebe des Tragegestells. Dies kann beispielsweise besonders einfach dadurch realisiert werden, wenn ein Rohrrahmen als Tragegestell und ein U-Rohr als Klemmstütze verwendet werden. Das U-Rohr wird an den bezüglich des Rahmens inneren Seiten an Rohrabschnitten des letzteren schwenkbar angebracht, was, im Falle der Ausbildung des Rahmens in seinem unteren Bereich als oder mit Standkufen, z. B. in der Nähe des hinteren Endes sein kann, also auf Grund der Krümmung der Standkufen an einer bezüglich der Unterlage für den Sicherheitssitz erhöhten Position. Wird nun vor- und/oder oberhalb der Schwenkachse der Klemmstütze eine Querverstrebung des Tragegestells oder ein Rand der im Rohrrahmen befestigten Sitzschale vorgesehen, so wird dadurch automatisch der Schwenkbereich der Klemmstütze begrenzt. Auf gesonderte Schwenkwegbegrenzer kann bei dieser vorteilhaften Ausgestaltung verzichtet werden.

Bei dem derart ausgebildeten Sicherheitssitz kann es im Einsatz zwar dazu kommen, daß sich das Tragegestell nach oben hinten gegen die Fahrzeugsitz-Rückenlehne noch geringfügig verschwenken kann, wenn das Fahrzeug z. B. einen Stoß von hinten bekommt, jedoch wird diese Schwenkbewegung durch die Schwenkwegbegrenzung beispielsweise in Form der vorbeschriebenen Querstrebe eines Rohrrahmens wenigstens nach kurzem Schwenkweg gestoppt. Dadurch und auch durch die Halterung der Klemmstütze zwischen der nicht starren Sitzfläche und ebensolchen Rückenlehne des Fahrzeugsitzes kann auch ein Teil der Stoßenergie aufgebraucht werden, wie bei einem Dämpfungsvorgang oder einer geplanten Verformung.

Natürlich kann auch die Einsteckposition der Klemmstütze direkt fixiert werden, indem beliebige Verrastungen und/oder Arrelierungen verwendet werden, die üblicherweise bekannt sind und hier daher nicht im einzelnen beschrieben werden müssen. Dazu enthalten die Halteeinrichtungen für die Klemmstütze vorzugsweise in zumindest einer Stellung fixierbare Feststelleinrichtungen und bevorzugt in verschiedenen Stellungen fixierbare Rasteinrichtungen oder insbesondere stufenlos fixierbare Klemmeinrichtungen.

Vorzugsweise sind Ausgestaltungen der Zentrierstütze analog zur Klemmstütze vorgesehen. Es kann demnach vorgesehen werden, daß die Zentrierstütze von ihrer Ruhestellung ausgehend nach unten in zumindest eine Schwenkstellung verschwenkbar ist.

Vorzugsweise ist die Zentrierstütze in der vorderen Hälfte, bevorzugt im Bereich des Vorderendes des Sicherheitssitzes schwenkbar angebracht, weist insbesondere in ihrer Ruhestellung ausgehend von ihrer Schwenkachse zumindest im wesentlichen zum Hinterende des Sicherheitssitzes und ist bevorzugt in wenigstens eine zumindest im wesentlichen in Richtung zum Vorderende des Sicherheilssitzes weisende, stützende Schwenkstellung verschwenkbar, in der die Zentrierstütze zumindest bereichsweise an einen vorderen Stirnbereich des Fahrzeugsitz-Sitzkissens anlegbar ist. Die mit dieser Ausführungsform erreichbaren Vorteile sind im übrigen dieselben wie die, die im Zusammenhang mit einer entsprechend ausgebildeten Klemmstütze oben beschrieben wurden.

Auch die Ausführungsalternative, die Zentrierstütze in der hinteren Hälfte des Sicherheitssitzes an diesem, bevorzugt ggf. an dem Tragegestell schwenkbar anzubringen und insbesondere durch einen U-förmigen Bügel auszubilden, der wenigstens im wesentlichen bis zum Vorderende des Sicherheitssitzes reicht und bevorzugt diesen und/oder das Fahrzeugsitz-Sitzkissen dort umfaßt, ist entsprechend der der Klemmstütze. Beim Umgreifen des Fahrzeugsitz-Sitzkissens wird der Sicherheitssitz gleichsam an letzerem eingehängt, was eine besonders sichere Halterung ergibt und beispielsweise bei Montage des Sicherheitssitzes auf dem Beifahrersitz problemlos möglich ist. Auf Grund des spezifischen Einsatzes der Zentrierstütze könnte zusätzlich vorgesehen sein, daß die Zentrierstütze am Ende nach unten abgewinkelt ist, um die Rücksitzvorderkante zu umgreifen, um einen noch besseren Halt zu ermöglichen. Eine derartige hakenartige Ausbildung ist aber grundsätzlich auch bei der Klemmstütze möglich.

Eine Anpassung der Stützen an übliche Dimensionen und Platzvorgaben in Fahrzeugen sowie von Kindern ist ohnehin selbstverständlich und muß daher hier nicht gesondert erwähnt werden. Je nach angestrebter Wirksamkeit der jeweiligen Stützen kann ohne Weiteres beispielsweise eine hakenförmige Ausbildung derselben vorgesehen werden, ohne den Kern der Erfindung zu verlassen. Auch eine Anpassung der Stützen an die Kontur des Sicherheitssitzes durch entsprechende Formgebung ist durch die Erfindung abgedeckt, solange von deren Merkmalen Gebrauch gemacht wird.

Die Halteeinrichtungen für die Zentrierstütze können bevorzugt genauso wie die für die Klemmstütze ausgebildet sein. Allerdings ist es für die Zentrierstütze bevorzugt, in mehreren Positionen fixierbare Halteeinrichtungen vorzusehen, da dadurch ein Einstellen auf verschiedene Fahrzeugsitz-Sitzkissen-Formen und -Längen möglich ist. Ferner wird damit ein besonders sicheres Befestigen des Sicherheitssitzes bereits durch die Zentrierstütze erreicht, wie es auch z. B. auf Eisenbahnsitzen ausreichend sein kann.

Bei einer weiteren bevorzugten Ausführungsmöglichkeit sind zwei Schwenkstützen zur Bildung einer Klemmstütze und insbesondere einer Zentrierstütze vorgesehen. Vorzugsweise sind diese beiden Schwenkstützen als U-förmige Bügel ausgebildet, die insbesondere entsprechend im Bereich des Hinterendes bzw. des Vorderendes des Sicherheitssitzes, bevorzugt ggf. des Tragegestells, schwenkbar angeordnet und vorzugsweise in ihren Ruhestellungen zumindest im wesentlichen aufeinander zu gerichtet. Alternativ sind insbesondere die Klemmstütze und die Zentrierstütze um die gleiche oder nahe beieinander liegende Schwenkachsen schwenkbar angebracht und bevorzugt als U-förmige Bügel ausgebildet, die insbesondere in ihren Ruhestellungen zumindest im wesentlichen voneinander weg gerichtet sind.

Insgesamt ist noch zu beachten, daß es nicht erforderlich ist, daß eine Klemmstütze und eine Zentrierstütze gemeinsam vorhanden sind. Um bereits die Vorteile der Erfindung zu erzielen, genügt der Einsatz einer Klemmstütze oder einer Zentrierstütze. Es ist allerdings möglich und besonders vorteilhaft, eine Klemmstütze und eine Zentrierstütze vorzusehen. Bei Verwendung nur einer Klemmstütze oder einer Zentrierstütze können außerdem, wie auch bei der gemeinsamen Verwendung einer Klemm- und einer Zentrierstütze, noch andere Schwenkstützen vorhanden sein, um über die Sicherung gegen eine aufwärtsgerichtete (Kipp-) Bewegung des montierten Sicherheitssitzes hinaus weitere Effekte zu ermöglichen. Gesonderte Schwenkstützen können zum Unterbinden einer Wippmöglichkeit, zum Anschließen des Sicherheitssitzes an andere Zubehörteile, wie Fahruntersätze, Schaukeln u. a. vorgesehen sein. Diese zusätzlichen Funktionen können aber auch mit entsprechend geeignet ausgebildeten und angeordneten Klemm- und/oder Zentrierstützen erfüllt werden. Durch die Erfindung wird keine der vorerwähnten Kombinationsmöglichkeiten ausgeschlossen oder beschränkt.

Es kann ferner beispielsweise auch vorgesehen werden, daß eine oder mehrere Schwenkstützen mittels Federeinrichtungen in die Ruhestellung und/oder eine Schwenkstellung vorgespannt sind. Dies kann bereits abhängig von der Ausgestaltung und Anwendung selbst eine ausreichende Festlegung der Stütze(n) ergeben, deren Fixierung erleichtern oder die Montage oder Demontage des Sicherheitssitzes vereinfachen. Alternativ oder zusätzlich können auch geeignete Klemmeinrichtungen bei einer oder mehreren Stellungen der Stütze(n) vorgesehen werden.

Die Erfindung wird nachfolgend anhand von Ausführungsbeispielen unter Bezugnahme auf die Zeichnung näher erläutert; in dieser zeigen:
- Fig. 1: eine erste Ausführungsform des Kinder-Sicherheitssitzes in auf dem Autositz montierter Position,
- Fig. 2: eine Frontansicht der ersten Ausführungsform des Sicherheitssitzes auf dem Fahrzeugsitz in Blickrichtung des Pfeiles III in Fig. 1
- Fig. 3: eine zeichnerische Darstellung einer zweiten Ausführungsform analog Fig. 1,
- Fig. 4: eine Darstellung der zweiten Ausführungsform des Sicherheitssitzes analog der Ansicht in Fig. 2,
- Fig. 5: eine zeichnerische Darstellung analog Fig. 4,
- Fig. 6: eine Seitenansicht der ersten Ausführungsform des Sicherheitssitzes in einer Funktionsstellung für den Hausbereich,
- Fig. 7: eine perspektivische Ansicht einer dritten Ausführungsform des Sicherheitssitzes von schräg vorne,
- Fig. 8: eine zeichnerische Darstellung der dritten Ausführungsform des Sicherheitssitzes beim Tragen,
- Fig. 9 und 10: Prinzipskizzen von Montageschritten zum Anbringen an einem Fahrzeugsitz anhand der dritten Ausführungsform des Sicherheitssitzes,
- Fig. 11 und 12: Prinzipskizzen von weiteren Montageschritten zum Anbringen an einem Fahrzeugsitz anhand der ersten Ausführungsform des Sicherheitssitzes,
- Fig. 13: eine Prinzipskizze eines Details der ersten Ausführungsform des Sicherheitssitzes analog Fig. 6,

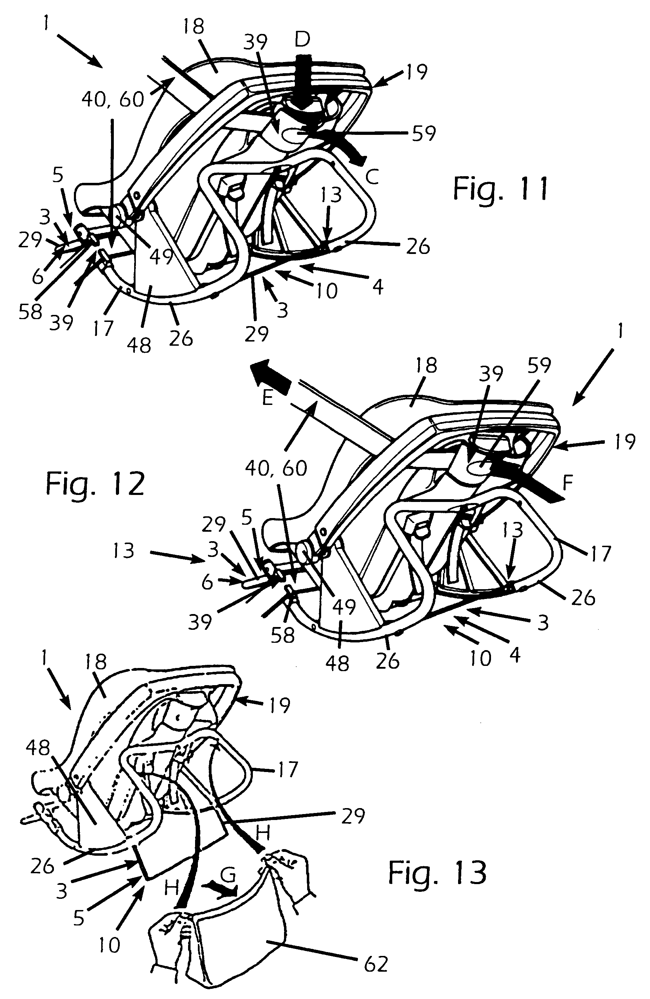

- Fig. 11 und 12: Prinzipskizzen von weiteren Montageschritten zum Anbringen an einem Fahrzeugsitz anhand der ersten Ausführungsform des Sicherheitssitzes,

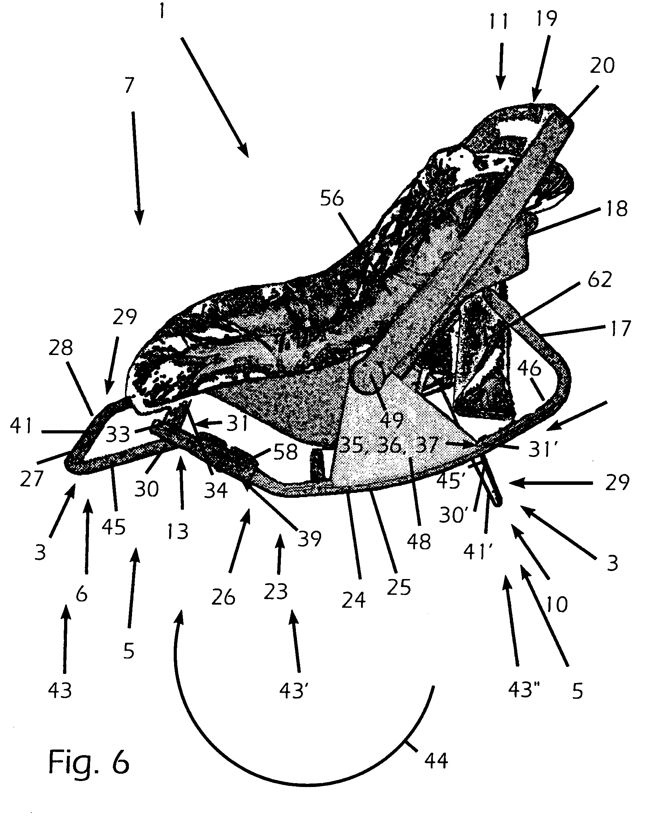

- Fig. 13: eine Prinzipskizze eines Details der ersten Ausführungsform des Sicherheitssitzes analog Fig. 6,

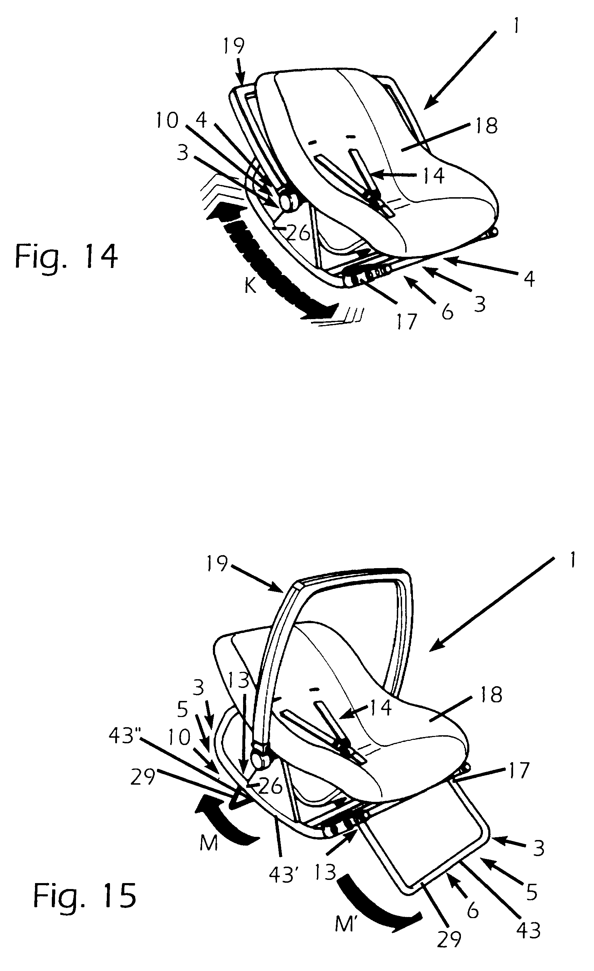

- Fig. 14 und 15: Prinzipskizzen der ersten Ausführungsform des Sicherheitssitzes analog Fig. 6 in Funktionsstellungen für den Hausbereich,

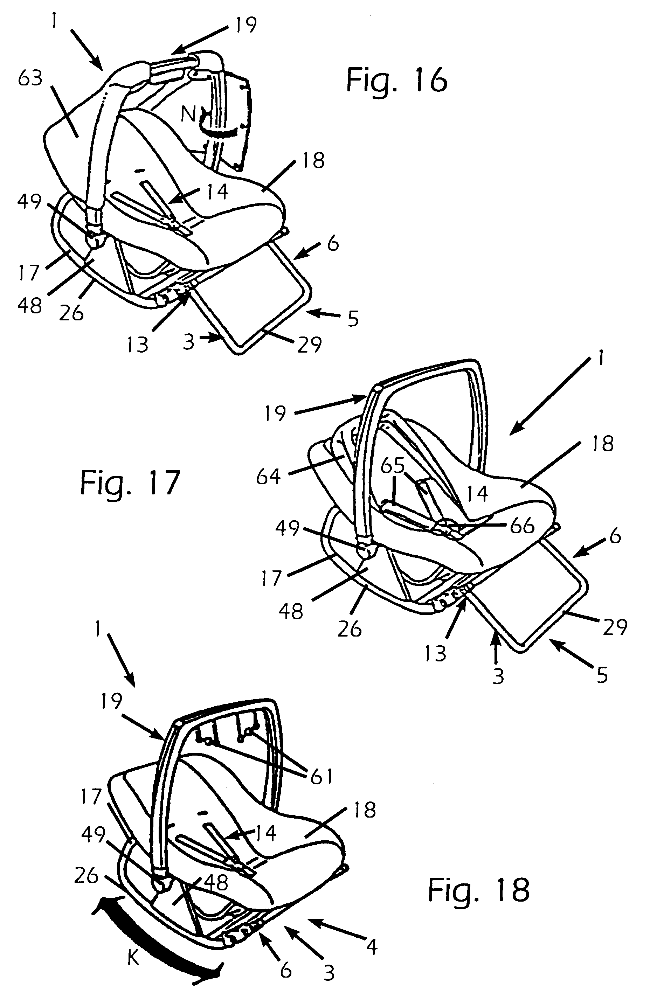

- Fig. 16: eine zeichnerische Darstellung einer vierten Ausführungsform des Sicherheitssitzes,
- Fig. 17: eine zeichnerische Darstellung einer fünften Ausführungsform des Sicherheitssitzes, und
- Fig. 18: eine zeichnerische Darstellung einer sechsten Ausführungsform des Sicherheitssitzes.

In sämtlichen Figuren der Zeichnung sind gleiche Teile mit denselben Bezugszeichen bezeichnet.

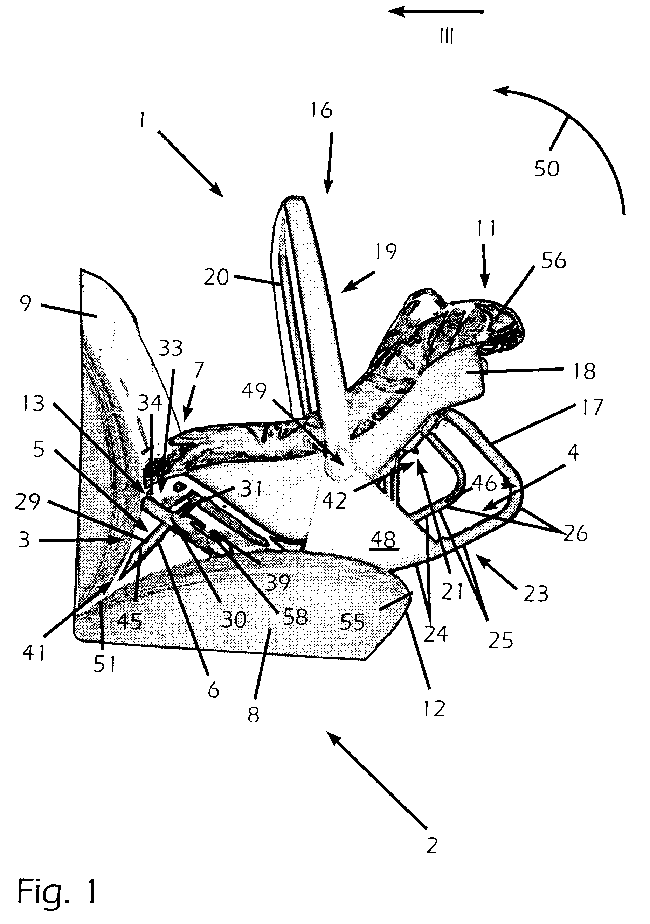

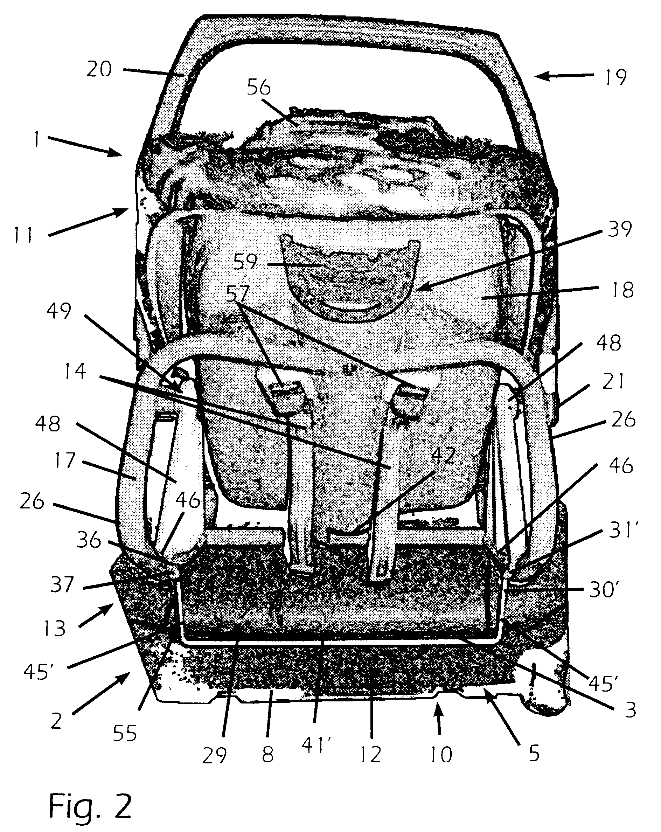

In den Fig. 1 und 2 ist eine erste Ausführungsform des Sicherheits- oder Kindersitzes 1 in einer Montageposition auf einem Fahrzeugsitz 2 mit einem Fahrzeugsitz-Sitzkissen 8 und einer Fahrzeugsitz-Rückenlehne 9 (in Fig. 2 nicht sichtbar) dargestellt. Der Kindersitz 1 besteht im wesentlichen aus einem Halte- oder Tragegestell 17 und einer zwischen zwei von Unterstreben oder Standkufen 26 des Haltegestells 17 nach oben stehenden Haltewangen 48 um einen Achsbereich oder eine Schwenkachse 49 schwenkbar gelagerten Sitzschale 18 aus Kunststoff zur Aufnahme eines Kleinstkindes. Zum Einstellen verschiedener Sitz- und Liegepositionen sind Verstelleinrichtungen 21 zum Verstellen und Fixieren von Schwenkpositionen der Sitzschale 18 vorgesehen. Die Sitzschale 18 ist mit einem gepolsterten Überzug 56 ausgestattet. Wie anhand der Figuren 1 und 2 deutlich ist, ist der Sicherheitssitz 1 in einer Reboard-Stellung 16, d. h. mit dem Kopfteil in Vorwärtsfahrtrichtung montiert.

Das Trage- oder Standgestell 17 ist im wesentlichen aus Rohren oder einem gebogenen Rohr geformt und besteht aus Metall. Seine unteren, die Haltewangen 48 tragenden Standkufen oder Streben 26 verlaufen in Richtung der Schwenkebene der Sitzschale 18 und haben die Funktion zweier in dieser Richtung verlaufender Schaukelkufen. Sie sind nämlich nach Art der Kufen eines Schaukelstuhls leicht gebogen, so daß die Unterseite 23 des Sicherheitssitzes 1 bogenförmig gekrümmt ist und der gesamte Sicherheitssitz 1 auch als Schaukelsitz fungieren und verwendet werden kann. Dabei ist die Sitzschale 18 gegenüber dem Standgestell 1 mittels der Verstelleinrichtungen 21 arretiert. Die technische Ausbildung einer derartigen, geeigneten Arretiervorrichtung 42 ist aus EP 195 037 prinzipiell bekannt. Ebenfalls an der Schwenkachse 49 ist ein Tragebügel 20 einer Trageeinrichtung 19 des Sicherheitssitzes 1 schwenk- und in wenigstens zwei Stellungen arretierbar angeordnet.

Der Kern der Erfindung besteht nun in den in den beiden Endbereichen 7 und 11 des Tragegestells 17 angeordneten bzw. wirksamen, ausklappbaren Stützauslegern oder Schwenkstützen 3, die hier konstruktiv zweckmäßig als Draht- (in Figuren 1 und 2 bei 10) oder Rohrbügel (in Figuren 1 und 2 bei 6) ausgebildet sind. Wenn hier von "an beiden Enden" gesprochen wird, so müssen nicht an beiden Enden zwangsläufig gemeinsam solche Stützausleger oder Schwenkstützen 3 vorhanden sein. Vorteilhafte Wirkungen sind auch dann bereits erzielbar, wenn ein solcher Stützausleger 3 nur an einem Ende 7 oder 11 vorhanden ist, weil die Stützen 3 in unterschiedlichen Funktionsstellungen des Kindersitzes 1 auch voneinander unabhängige Funktionen erfüllen.

Die beiden Ausleger oder Schwenkstützen 3 sind in den Figuren näher mit 6 und 10 bezeichnet. Es sind dies mit Bezug auf die Montagestellung im Automobil der bezüglich der Vorwärtsfahrtrichtung hintere, d. h. im Bereich des Hinterendes 7, im Fußbereich der Sitzschale 18 bzw. des Sicherheitssitzes montierte Klemmausleger oder die Klemmstütze 6 und der diesbezüglich vordere Zentrierausleger oder die Zentrierstütze 10 im Bereich des Vorderendes 11. Beide Ausleger oder Schwenkstützen 6 und 10 sind in den Endbereichen 7 und 11 der Standkufen 26 des Tragegestells 17 um eine zur Schwenkachse 49 der Sitzschale 18 parallele Schwenkachse 31 bzw. 31' schwenkbar an den Standkufen 26 gelagert. Die Schwenkebenen der beiden Ausleger oder Schwenkstützen 6 und 10 sind dieselben wie die der Sitzschale 18.

Beide Ausleger oder Schwenkstützen 6 und 10 sind durch U-förmig gebogene Bügel 29 gebildet. Die Lagerung dieser U-förmigen Bügel 29 erfolgt im Bereich ihrer vertikalen U-Schenkelenden 30 und 30'. Die beiden U-Bügel 29 spannen eine Ausleger- oder Schwenkstützenebene auf. In eingeschwenkter Inaktiv-oder Ruhestellung 4 verläuft diese Ebene im wesentlichen parallel zu den Standkufen 26 des Tragegestells 17 bzw. etwa in der durch die beiden parallelen Standkufen 26 aufgespannte Fläche. In dieser Stellung sind die beiden Ausleger mit ihren U-Querschenkeln 41 und 41' einander zugewandt. Es ist dies die Schaukelfunktionsstellung, in der der gesamte Kindersitz 1 beispielsweise auf dem Fußboden eines Wohnraums, d. h. auf einer Aufstellfläche geschaukelt werden kann (Figuren 14 und analog 18).

In ausgeklemmter oder -geschwenkter Aktiv- oder Schwenkstellung 5 sind die beiden Schwenkstützen 3 oder wenigstens eine von beiden so geschwenkt, daß sie mit den durch die U-Querschenkel 41 und 41' gebildeten Teilen vom Zentrum des Tragegestells 17 abgewandt sind (Fig. 6). In dieser Stellung hat das Tragegestell 17 bzw. der Sicherheitssitz 1 drei Kontaktbereiche 43, 43' und 43'' mit einer Aufstellfläche, nämlich zunächst den Mittelbereich 43' der beiden Standkufen 26, d. h. deren der Standfläche nächstliegenden Bereiche, sowie den Bereichen 43 und 43'' der beiden U-Querschenkel 41 und 41' der Stützausleger oder Schwenkstützen 3, die in dieser in Fig. 6 besonders gut erkennbaren Aktiv- bzw. Schwenkstellung 5 besonders großen Abstand vom Mittelbereich 43' einnehmen und dadurch eine hohe Standsicherheit gewährleisten. Es genügt für einen sicheren Stand des Kindersitzes 1, wenn er auf zwei der drei Kontaktbereiche 43, 43' und 43'' steht, so daß auch nur zwei davon vorhanden sein müssen.

Die beiden Schwenkausleger oder -stützen 6 und 10 haben aber auch und gerade in der im Auto benutzten Montagestellung eine ganz besondere Funktion:

### a) Stützausleger oder Schwenkstütze 6:

Der Stützausleger 6 nimmt in der Automobil-Montagestellung die vorstehend geschilderte und in Fig. 6 dargestellte Aktiv- oder Schwenkstellung 5 ein (Figuren 1 und 2). In dieser Stellung ist er zwischen dem Sitzpolster 8 und der Rückenlehne 9 des Autositzes 2 eingeklemmt, nämlich von der Sitzseite her eingeschoben. Durch seine Schwenkbarkeit am Tragegestell 17 paßt er sich den jeweiligen Verhältnissen der unterschiedlichen Autotypen an und sucht sich seine Montageend- oder passenden Schwenkstellung 5 selbst.

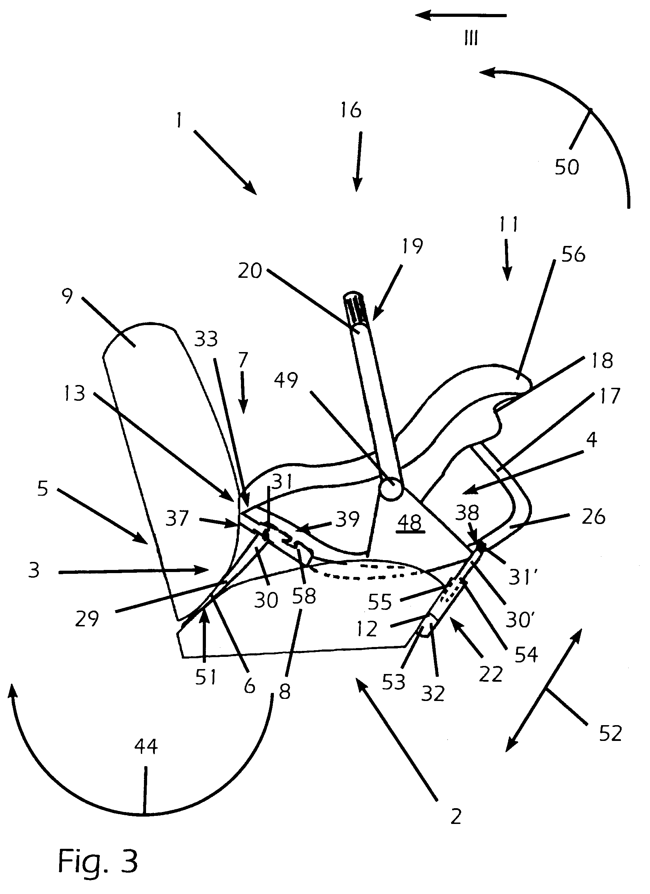

Nun besteht eine Besonderheit des Erfindungsgegenstandes darin, daß der Schwenkbereich des Stützauslegers oder der Klemmstütze 6 in vom Tragegestell 17 weg gewandter Schwenkrichtung 44 (Fig. 6 und analog Fig. 3) einen den Schwenkbereich begrenzenden Anschlag oder ein Gegenlager 33 findet, der bzw. das Halteeinrichtungen 13 bildet. Dieser Schwenkanschlag 33 ist durch die Querstrebe 34 des Tragegestells 17 gebildet. Die Querstrebe 34 erstreckt sich lotrecht zur Schwenkebene des Sicherheitssitzes 1 zwischen den beiden im wesentlichen parallel zueinander verlaufenden Standstreben bzw. Standkufen 26 und fixiert den Lageabstand zwischen diesen tragenden Sitzteilen. Der Stützausleger 6 ist mit den oberen Enden 30 seiner vertikalen U-Schenkel 45 an den Innenflanken 46 der Standkufen bzw. Standstreben 26 des Traggestells 17 anliegend gelagert. Die Lagerung erfolgt in bekannter Weise z. B. durch eine Schraubverbindung im - bezogen auf die Sitzschale 18 - fußseitigen Endbereich, d. h. im Bereich des Hinterendes 7 des Tragegestells 17. Durch ihre Anordnung zwischen den beiden Kufen 26 schränkt die Querstrebe 34 den Schwenkbereich des Stützauslegers oder der Klemmstütze 6 in Schwenkrichtung 44 ein und bildet dort einen Anschlag oder ein Gegenlager 33. Dieser Anschlag 33 ist für die Auto-Montagestellung von ganz besonderer Wichtigkeit. Im Falle eines Heck-Auffahrunfalles besteht die Gefahr eines Umschlages des gesamten Kindersitzes in Pfeilrichtung 50 (Fig. 1 und analog Fig. 3). Im Gegensatz zu einem Front-Auffahrunfall ist nämlich bei einem Heck-Auffahrunfall der Automatikgurt 47 eines Fahrzeuggurtsystems 40 wie überhaupt jeder Schulter- oder Beckengurt funktionsunfähig. In einem solchen Falle werden die Halteeinrichtungen 13 in Form der Querstrebe 34 als Endanschlag 33 wirksam. Die Schwenkung des gesamten Kindersitzes in Pfeilrichtung 50 um die Schwenkachse 31 der Stützstrebe oder Schwenkstütze 6 wird blockiert. Diese Blockierung ist in gewissem Umfang abgefedert durch die Steckfixierung der Schwenkstütze oder Stützstrebe 6 in der Trennfuge 51 zwischen Fahrzeugsitz-Sitzkissen 8 und -Rückenlehne 9 des Autositzes 2.

Im Gegensatz zu dieser Lösung schlagen über keine derartige Stützstrebe oder Klemmstütze 6 oder anderweitige Abstützung verfügende Kindersitze, insbesondere Reboard-Kindersitze unkontrolliert um.

Im Hausbereich dient die Klemmstütze 6 als Stabilisierung, damit ein Wippen des Sicherheitssitzes 1 unterbunden werden kann, wie dies in den Figuren 6 bzw. 14 und 15 zu sehen ist. Damit die Klemmstütze 6 nicht durch ruckartige Bewegungen eines in dem Sicherheitssitz liegenden Kindes verstellt wird, kann dafür Sorge getragen werden, daß das Verschwenken der Klemmstütze 6 nicht zu leicht geht, was bereits durch entsprechende Dimensionierung an den Lagern der Schwenkachse 31 erreicht werden kann. Bei der gezeigten ersten Ausführung ist jedoch eine fixierbare Klemmeinrichtung 37 als weitere Halteeinrichtungen 13 vorgesehen, durch die eine eingestellte Schwenkstellung 5 der Klemmstütze 6 durch Reibschluß fixiert werden kann. Diese Fixierung kann zusätzlich auch bei der Montage im Auto verwendet werden.

Alternativ zur Klemmeinrichtung 37 könnte als Halteeinrichtungen 13 auch eine Rasteinrichtung oder eine andere Feststelleinrichtung zum Halten der Klemmstütze in einer gewünschten Schwenkstellung 5 verwendet werden.

### b) Zentrierausleger oder -stütze 7:

Dieser Zentrierausleger 10 dient in der Auto-Montagestellung der Lagesicherung bei Schrägaufprall-Unfällen. In der Praxis spricht man von "11-Uhr"- bzw. "13-Uhr"-Unfällen.

Der Zentrierausleger 10 ist mit den oberen Enden 30' seiner vertikalen U-Schenkel 45' an den Innenflanken 46 der Standkufen bzw. Standstreben 26 des Tragegestells 17 anliegend gelagert. Die Lagerung erfolgt in bekannter Weise z. B. durch eine Schraubverbindung im - bezogen auf die Sitzschale 18 - kopfseitigen Endbereich, d. h. im Bereich des Vorderendes 11 des Tragegestells 17. Durch ihre Anordnung zwischen den beiden Kufen 26 wird durch das Gegenlager 38 der Schwenkbereich des Zentrierauslegers oder der Zentrierstütze 10 in entgegengesetzter Schwenkrichtung 44 eingeschränkt. Die Ausgestaltung und Lagerung der Zentrierstrebe oder -stütze 10 am Trage- bzw. Standgestell 17 ist somit prinzipiell funktionsgleich mit der oben ausführlich beschriebenen Lagerung der Stützstrebe oder Schwenkstütze 6. Während aber die Stützstrebe 6 bei dieser ersten Ausführungsform mehr oder weniger frei und ungehindert zwischen ihren beiden Schwenkendstellungen (Aktiv- bzw. Schwenk- 5 und Ruhe- bzw. Inaktivstellung 4) am Tragegestell 17 schwenkbar gelagert ist, ist für die Schwenklagerung der Zentrierstrebe oder - stütze 10 gegenüber dem Traggestell 17 bzw. gegenüber seinen beiden Standkufen 26 eine Arretierbarkeit durch Halteeinrichtungen 13 mittels einer fixierbaren Rasteinrichtung 36 als Feststelleinrichtung 35 in unterschiedlichen Schwenkstellungen 5 vorgesehen. Diese Arretierbarkeit soll in Arretier- oder Schwenkstellung 5 eine Weiterschwenkung weitestgehend unmöglich machen. Daher ist ein normales Federrastgesperre für die Verrastung der Zentrierstrebe oder -stütze 10 in unterschiedlichen Schwenkstellungen 5 wenig bzw. nicht geeignet.

Diese Verrastbarkeit in unterschiedlichen Schwenkstellungen 5 durch die Halteeinrichtungen 13 dient der Anpassungsfähigkeit an unterschiedliche Sitzgeometrien und Konturen je nach Automobil-Typ. Die Funktion der Zentrierstrebe oder -stütze 10 in Auto-Montagestellung besteht darin, daß sie mit der Vorderkante, d. h. mit dem horizontalen U-Schenkel 41' des Auslegers oder der Schwenkstütze 10 an der Stirnseite oder allgemein dem vorderen Stirnbereich 12 des Fahrzeugsitzes 2 in Anlage bringbar und in Anlagestellung am Traggestell 17 arretierbar ist.

Analog zur Klemmstütze 6 könnte für die Zentrierstütze 10 alternativ oder zusätzlich auch ein Gegenlager als Anschlag weiterer Halteeinrichtungen 13 vorgesehen werden, wobei auch dadurch eine Schwenkstellung 5 festgelegt wird.

Um eine weitestgehende Anpaßbarkeit der Zentrierstrebe oder -stütze 10 an unterschiedliche Sitzgeometrien zu ermöglichen, ist die Wirklänge der als Lenker anzusprechenden Schwenkstütze bei einer zweiten Ausführungsform in Längsrichtung 52 (Fig. 3) veränderbar, nämlich verlängerbar. Zu diesem Zweck ist eine Zentrierstrebenverlängerung in Form eines ausziehbaren Aufsatzes 32 vorgesehen, der nach Art einer Tasche 53 ausgebildet ist, die mit ihrer Öffnungskante 54 reibungsschlüssig auf den eigentlichen Zentrierbügel bzw. Zentrierausleger 10 aufschiebbar und in unterschiedlichen Verschiebestellungen vorzugsweise durch Reibungsschluß oder auch anderweitig, beispielsweise auch durch einen Federrastschluß fixierbar ist. In verrasteter Anlagestellung im vorderen Stirnbereich 12 des Sitzkissens 8, z. B. in Fig. 2 an der Vorderkante 55 des Sitzkissens des Automobils sorgt die Zentrierstrebe oder -stütze 10 dafür, daß auch bei Unfällen der Sicherheitssitz 1 weitgehend in Fahrtrichtung des Fahrzeuges auf dem Autositz 2 fixiert bleibt.

Bei der gezeigten ersten Ausführungsform ist die Zentrierstütze 10 als Drahtbügel ausgeführt. Um dabei eine ausreichende Festigkeit zu erreichen, muß dieser Drahtbügel sehr steif ausgeführt sein. Andernfalls sollte die Zentrierstütze 10 nur als Standstütze eingesetzt werden, um beispielsweise das Wippen zu verhindern oder eine Sicherung beispielsweise auf rutschigem Untergrund oder einem Eisenbahnsitz o. ä. zu bilden.

Der Zentrierausleger 10 kann aber genausogut wie der Klemmausleger 6 als Rohrbügel gefertigt sein. Diese Ausführung ist dann in jedem Fall stabil genug, um im der Schwenkstellung 5 des Montageendzustandes vor den Stirnbereich oder die Stirnseite 12 des Fahrzeugsitz-Sitzkissens 8 greifend ein seitliches Drehkippen zu verhindern. Ebenso ist es möglich, daß der Zentrierausleger 10 als großes U-förmiges Rohr gefertigt wird und innerhalb der U-Kontur die Sitzfläche dreiseitig einspannt.

Diese Funktion der Zentrierstütze 10 verbessert das Unfallverhalten des Sicherheitssitzes insbesondere bei den genannten ''11-Uhr''- und ''13-Uhr''-Unfällen, also beim schrägen Seitenaufprall. Die Zentrierstütze 10 verhindert bei diesen Stößen, daß sich der Sicherheitssitz 1 um eine vertikale Achse im Bereich seines Hinterendes 7 mit seinem Vorderende 11 zur Fahrzeugsitz-Rückenlehne 9 hin dreht. Durch eine die Vorderkante 55 des Fahrzeugsitz-Sitzkissens 8 hintergreifende Lage der Zentrierstütze 10 wird auch einem Kippen um eine horizontale Achse im Bereich des Hinterendes 7 des Sicherheitssitzes 1 entgegengewirkt. Die letztere Funktion wird auch von der Klemmstütze 6 erfüllt. Im optimalen Fall wirkt der Zentrierausleger 10 bei den vorgenannten Unfällen mit dem Klemmausleger 6 so zusammen, daß der Sitz 1 nicht auf oder von der Sitzfläche des Fahrzeugsitzes 2 gedreht wird, sondern fest zentriert darauf ruhen bleibt.

Bei der ersten Ausführungsform nach den Figuren 1, 2 und 6 ist ferner ein Rückhaltesystem 14 in Form eines Fünfpunktgurtes an der Sitzschale 18 vorgesehen, wobei Einstellvorrichtungen 57 dieses Gurtes in Fig. 2 an der Rückseite der Sitzschale 18 zu sehen sind. Es könnten aber auch andere Gurtsysteme oder Prallkissen Verwendung finden.

Die Standflächen der Standkufen 26, d. h. allgemein der Auflagen 24 der Unterseite 23 des Sicherheitssitzes sind mit einer Antirutschoberfläche 25 versehen, damit auch auf glatten Aufstellflächen, wie Ledersitzen oder Parkett, ein besonders sicherer Stand des Kindersitzes 1 gewährleistet ist. Analog sind die Unterseiten 27 der Schwenkstützen 3 mit einer Antirutschoberfläche 28 versehen. Die Antirutschoberflächen 25 und 28 können durch einen gummiartigen Überzug oder eine geeignete Lackierung oder auf andere geeignete Art erzeugt werden. Obwohl diese Antirutschoberflächen 25 und 28 zusätzlich eine gewisse Dämpfung des Sitzes 1 auf harten Aufstellflächen bzw. beim Abstellen darauf sowie einen Schutz gegen Beschädigungen darstellen, sind sie für die einwandfreie Funktion und Sicherheit des Sitzes 1 nicht erforderlich.

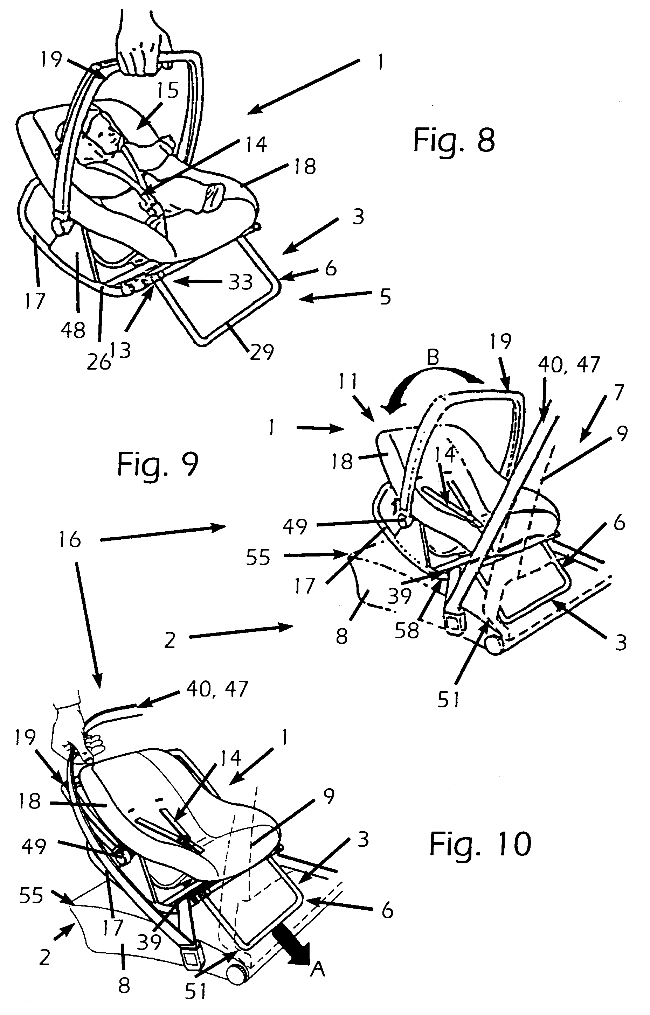

Ferner weist der Sicherheitssitz 1 dieser ersten Ausführungsform Gurtführungen 39 für ein Fahrzeuggurtsystem 40 (siehe Figuren 9 bis 12) auf. Die Gurtführungen 39 beinhalten zwei Beckenbefestigungen 58 für einen Fahrzeug-Dreipunktgurt 60, damit letzterer quasi im Beckenbereich seiner normalen Anwendung fest mit dem Tragegestell 17 verbunden ist. Die Beckenbefestigungen 58 bestehen aus zwei C-förmigen Ösen, in deren Öffnungen der Gurt eingefädelt werden kann. An der Unterseite der Sitzschale 18 ist eine Gurtklemme 59 integriert, in die der Brustteil des Dreipunktgurtes 60 eingesetzt und festgeklemmt wird. Nach dem Anbringen des Dreipunktgurtes 60 an den Sicherheitssitz 1 muß ersterer noch auf eine stramm sitzende Länge eingestellt werden, was besonders einfach geht, wenn ein Automatikgurt 47 in dem Fahrzeug vorhanden ist.

Die zweite Ausführungsform gemäß den Figuren 3 bis 5 zeigt zusätzlich zur ersten Ausführungsform die bereits im Zusammenhang mit letzterer beschriebene Zentrierstützenverlängerung in Form des durch die Tasche 53 gebildeten ausziehbaren Aufsatzes 32. An Stelle einer derartigen Verlängerung kann beispielsweise auch eine Verlängerungsmöglichkeit in der Stütze 10 selbst durch eine teleskopartige Ausbildung vorgesehen werden. Die Verlängerungsmöglichkeit kann aber auch an den Lagern der Stütze durch eine Radialverschiebung zur Schwenkachse erreicht werden. Ferner ist es auch möglich, für die Klemmstütze 6 eine Verlängerung vorzusehen, damit diese besonders weit und damit sicher zwischen das Sitzkissen 8 und die Rückenlehne 9 des Fahrzeugsitzes 2 eingeschoben werden kann.

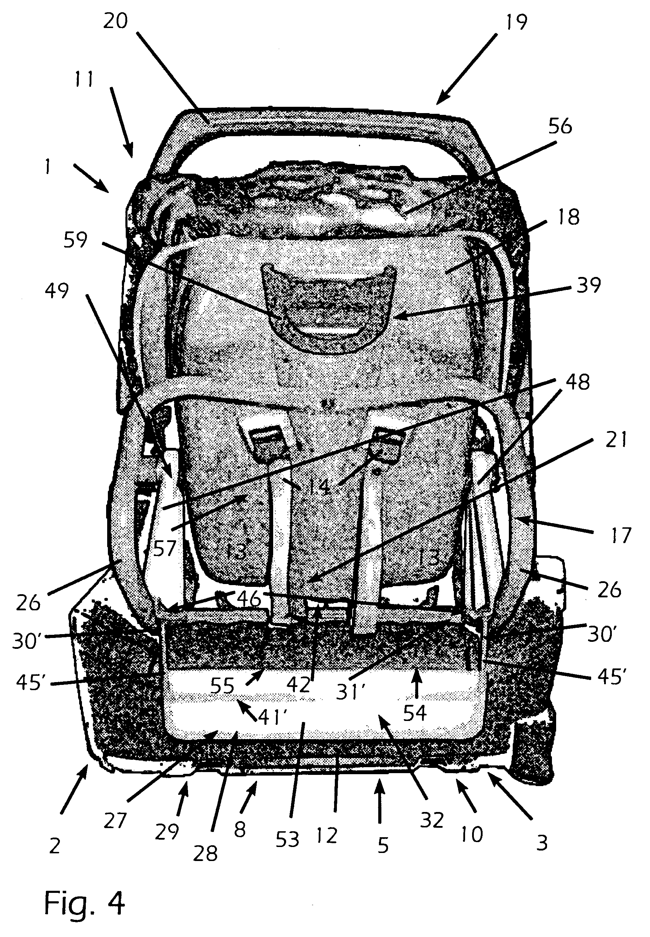

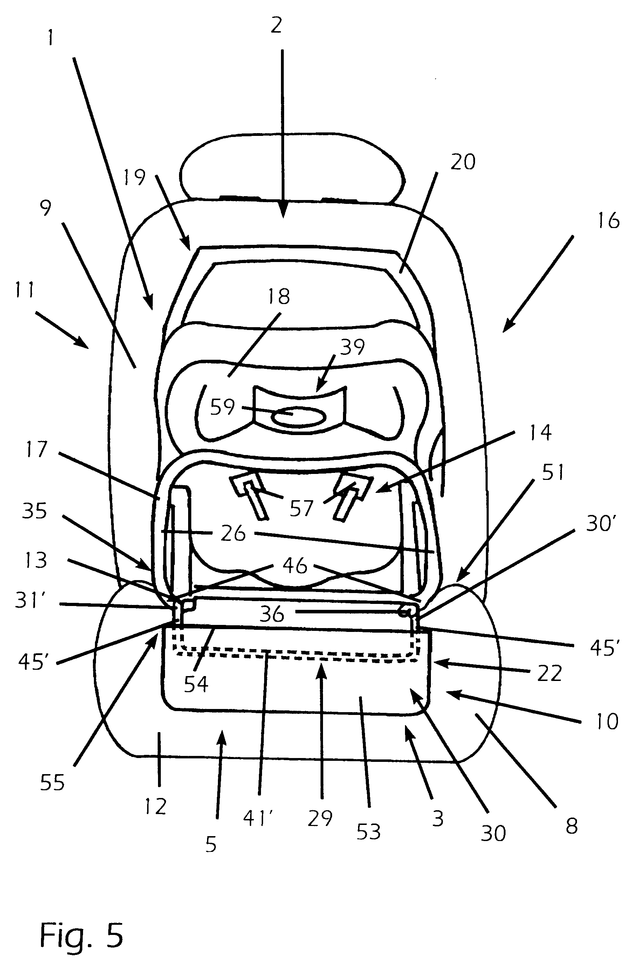

Insbesondere in den Figuren 4 und 5 ist der ausgezogene Aufsatz 32 gut zu erkennen. Der Aufsatz 32 liegt großflächig am vorderen Stirnbereich 12 des Fahrzeugsitz-Sitzkissens 8 an, und, wie unter Zuhilfenahme von Fig. 3 zu verstehen ist, hintergreift die Vorderkante 55 des Sitzkissens 8. Die Zentrierstütze 10 wird in dieser Lage durch die fixierbaren Rasteinrichtungen 36 fest und dauerhaft gehalten.

Im übrigen unterscheidet sich die zweite Ausführungsform von der ersten noch durch eine Griffausbildung am Tragebügel 20.

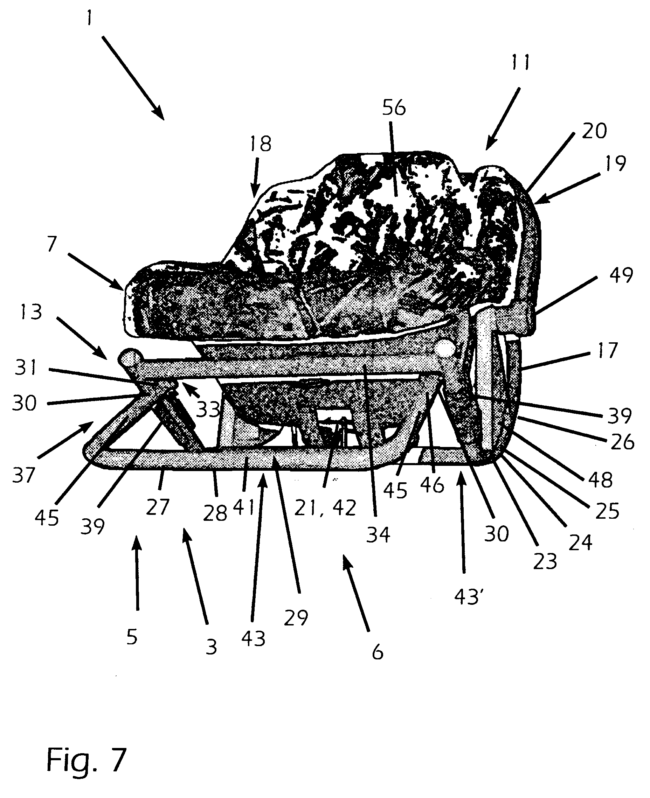

Fig. 7 zeigt eine dritte Ausführungsform des Sicherheitssitzes 1, wobei im Unterschied zu den beiden vorbeschriebenen keine Zentrierstütze vorgesehen ist. Durch die Alleindarstellung des Sicherheitssitzes 1 ist besonders gut die Halteeinrichtung 13 in Form des Gegenlagers 33 durch die hintere Querstrebe 34 des Tragegestells 17 zu erkennen. Die Abbildung macht deutlich, daß bei einem Aufwärtsschwenken der Klemmstütze 6 nach vorne oben (Fig. 7) in einer maximalen Schwenkstellung 5 die U-Schenkel 45 des U-Bügels 29 der Klemmstütze 6 gegen die hintere Querstrebe 34 anliegen, die somit ein den Schwenkweg der Klemmstütze 6 begrenzendes Gegenlager 33 darstellt.

Im Bereich des tiefsten Punktes der Sitzschale sind Verstelleinrichtungen 21 zu erkennen, die zum Verstellen und Feststellen der Sitzschale 18 in wenigstens zwei Sitz- und/oder Liegepositionen dient. Die Verstelleinrichtung 21 ist hier als eine längenverstellbare Schwenkstütze 22 ausgebildet, die zwischen der Sitzschale 18 und dem Tragegestell 17 wirkt. Die Schwenkstütze 22 könnte aber auch zwischen dem Tragegestell 17 oder dem gesamten Sicherheitssitz 1 und der Aufstellfläche wirkend vorgesehen sein, um das Tragegestell 17 selbst oder den ganzen Sicherheitssitz 1 zu kippen, wenn die Sitzschale 18 nicht gegenüber dem Tragegestell 17 verstellbar ist.

In der Zeichnung der Fig. 8 ist gezeigt, wie ein Kind 15 in dem Sicherheitssitz 1 getragen wird, wofür letzterer an dem hierfür vorgesehenen Tragebügel 20 gehalten wird. Nur beispielsweise ist in dieser und den folgenden skizzenhaften Darstellungen ein Dreipunktgurt als kindersitzeigenes Rückhaltesystem 14 gezeigt.

Der Sicherheitssitz 1 soll zusammen mit dem Kind 15 auf einen Fahrzeugsitz 2 montiert werden, weshalb, da es sich um ein Modell der dritten Ausführungsform handelt, bereits die Klemmstütze 6 ausgeklappt ist. Für die korrekte Montage kommt es in diesem Stadium nicht darauf an, wie weit die Klemmstütze 6 ausgeschwenkt wird, da sie sich selbst optimal einstellt, wie in Fig. 9 zu sehen ist. Das Gewicht des Kindersitzes 1 einerseits, in dem zur Vereinfachung das Kind 15 weggelassen wurde, was jedoch nicht erforderlich ist, und die Führungsflächen des Sitzkissens 8 oder der Rückenlehne 9 des Fahrzeugsitzes 2 andrerseits - je nachdem, ob die Klemmstütze 6 zuwenig oder zuviel ausgeschwenkt war - sorgen dafür, daß die Klemmstütze sich automatisch so verschwenkt, daß sie in die Fuge 51 zwischen dem Sitzkissen 8 und der gestrichelt gezeichneten Rückenlehne 9 gemäß Pfeil A hineinrutscht. Ggf. kann der Sicherheitssitz 1 noch etwas in Richtung Pfeil A nach hinten geschoben werden, damit die Klemmstütze 6 fest zwischen dem Sitzkissen 8 und der Rückenlehne 9 des Fahrzeugsitzes 2 sitzt.

Der im Fußbereich zwischen der Sitzschale 18 und dem Tragegestell 17 vorgesehene Freiraum (Fig. 7) ermöglicht es, daß der Beckenbereich des Fahrzeuggurtes 60, der hier ein Automatikgurt 47 ist, dazwischen zu den Beckenbefestigungen 58 geführt wird und in deren C-Form eingefädelt werden können, was im Ergebnis in Fig. 10 zu sehen ist.

Damit, wenn der Sicherheitssitz 1 leer, d. h. ohne Kind 15 im Auto montiert wird, das Kind beim späteren Hineinsetzen in den Sitz 1 nicht verletzt wird und der Ablauf des Hineinsetzens nicht zu kompliziert wird, sollte der Tragebügel 20 am besten nach vorne, d. h. zum Kopfteil hin weggeschwenkt werden, wie Pfeil B in Fig. 9 zeigt.

Fig. 10 erläutert ferner die Montage des Brustabschnittes des Fahrzeuggurtes 60 an dem Sicherheitssitz 1. Der Gurt wird hierfür um den Kopfbereich des Sicherheitssitzes herumgeführt und dort befestigt, wie näher im Zusammenhang mit den Figuren 11 und 12 beschrieben wird, die zwar die erste Ausführungsform des Sicherheitssitzes 1 zeigen, der jedoch hinsichtlich des Fahrzeuggurtes 60 bzw. 47 genauso wie die dritte Ausführungsform zu montieren ist. Aus Fig. 10 kann ferner jedoch noch entnommen werden, daß der Verlauf des montierten Gurtes 60 oder 47 den Sicherheitssitz 1 automatisch in der Fuge 51 zwischen dem Sitzkissen 8 und der gestrichelt gezeichneten Rückenlehne 9 festhält oder ihn gar noch weiter hineindrückt. Der Kindersitz 1 ist dadurch äußerst sicher befestigt.

In den Figuren 11 bis 13 wurde der Übersichtlichkeit halber der Fahrzeugsitz weggelassen.

Die Figuren 11 und 12 zeigen die rückseitige Befestigung des Fahrzeugsicherheitsgurtes 60 des Gurtsystems 40. Hierfür wird eine Gurtklemme 59 gemäß Pfeil C in Fig. 11 geöffnet und der Gurt 60, der hier beispielsweise ein statischer Dreipunktgurt ist, gemäß Pfeil D eingelegt. In Fig. 12 gibt Pfeil E an, wie der Gurt 60 strammzuziehen ist, so daß er dann gemäß Pfeil F durch Schließen der Gurtklemme 59 fixiert wird. Evtl. kann die Gurtklemme 59 so ausgebildet sein, daß sie zuerst geschlossen werden kann und dann erst der Gurt 60 strammgezogen wird.

In Fig. 13 ist ein Detail der ersten Ausführungsform näher gezeigt. Prinzipiell ist das abgebildete Täschchen 62 auch in Fig. 6 zu erkennen. Das Täschchen 62 dient zum Aufbewahren beispielsweise der Bedienungsanleitung des Sicherheitssitzes 1 und anderer Kleinigkeiten im Zusammenhang mit dem Kind. Das Täschchen 62 enthält an seiner Oberkante eine Federspange (in der Figur nicht sichtbar), die in Längsrichtung über das Täschchen hinaussteht und gemäß Pfeil G zur Montage des Täschchens 62 am Tragegestell 17 durchzubiegen ist. Dann werden die überstehenden Enden der durchgebogenen Federspange in extra hierfür vorgesehene Löcher im Tragegestell eingeführt, indem die Streckung der Federspange zugelassen wird, wenn die freien Enden mit den Löchern ausgerichtet sind, wie die Pfeile H verdeutlichen. Ähnliche oder andere Behältnisse können auch fest innerhalb des Sitzes integriert sein.

Die Figuren 14 und 15 zeigen die Verwendung der ersten Ausführungsform des Sicherheitssitzes 1 im Hausbereich. Fig. 14 stellt den Einsatz des Kindersitzes 1 als Wippe dar, die ein Schaukeln entsprechend dem Doppelpfeil K ermöglicht. Durch Ausklappen der Klemmstütze 6 und der Zentrierstütze 10 gemäß den Pfeilen M und M' wird der Sicherheitssitz 1 so stabilisiert, daß kein Schaukeln oder Wippen mehr möglich ist. Diese Wirkung könnte aber auch mittels der Klemmstütze 6 oder der Zentrierstütze 10 jeweils alleine erreicht werden.

Drei weitere Ausführungsformen sind in den Figuren 16 bis 18 gezeigt, wobei jeweils die dritte Ausführungsform, d. h. mit Klemmstütze 6 und ohne Zentrierstütze 10 zu Grunde liegt.

Fig. 16 zeigt eine vierte Ausführungsform des Kindersitzes 1, der zusätzlich ein Sonnenschutzdach 63 enthält, das gemäß Pfeil N an den Tragebügel 20 geknöpft wird. Bei entsprechender Ausgestaltung von Sonnenschutzdach 63 und/oder Tragebügel 20 oder allgemein Trageeinrichtung 19, kann das Sonnenschutzdach 63 auch bei anderen Ausführungsformen als Zubehör verwendet werden.

Die fünfte Ausführungsform gemäß Fig. 17 beinhaltet einen Sitzverkleinerer 64 sowie Gurtpolster 65 und Schloßpolster 66 für den Gurt des Kindersitz-Rückhaltesystems 14. Auch diese Teile sind ggf. als Zubehör im Zusammenhang mit anderen Ausführungsformen verwendbar.

Die in Fig. 18 gezeigte sechste Ausführungsform enthält Spielzeug 61, das an dem Tragebügel 20 angebracht ist. Wippt der Sitz 1 gemäß dem Doppelpfeil K, so wackelt das Spielzeug 61 zur Unterhaltung des Kindes ebenfalls hin und her. Selbstverständlich kann auch diese Ausgestaltung als Zubehör für andere Ausführungsformen ausgeführt sein.

Zusammenfassend genügt es im Sinne der Erfindung, wenn ein Sicherheitssitz 1 für Kinder zur Montage an einem Fahrzeugsitz 2 mindestens eine Schwenkstütze 3 enthält, die zwischen einer deren Schwenkweg sitzseitig begrenzenden Ruhestellung 4 und wenigstens einer Schwenkstellung 5 verschwenkbar angebracht ist, in der der Sicherheitssitz 1 zumindest teilweise über die Schwenkstütze 3 abstützbar ist. Die mindestens eine Schwenkstütze 3 ist derart angeordnet und ausgebildet, daß sie wenigstens in einer Schwenkstellung 5 zumindest bereichsweise entweder als Klemmstütze 6 bezogen auf den Fahrzeugsitz 2 am Hinterende 7 des Sicherheitssitzes 1 zwischen ein Fahrzeugsitz-Sitzkissen 8 und eine daran anschließende Fahrzeugsitz-Rückenlehne 9 einsetzbar oder als Zentrierstütze 10 bezogen auf den Fahrzeugsitz 2 am Vorderende 11 des Sicherheitssitzes 1 in einem vorderen Stirnbereich 12 des Fahrzeugsitz-Sitzkissens 8 anlegbar ist. Ferner sind für die Schwenkstütze 3 in mindestens einer Schwenkstellung 5 Halteeinrichtungen 13 vorgesehen, mittels derer wenigstens ein Verschwenken der Klemmstütze 6 zum Hinterende 7 bzw. der Zentrierstütze 10 zum Vorderende 11 des Sicherheitssitzes 1 aus der Schwenkstellung 5 sperrbar ist.

Bevorzugt ist diese Ausgestaltung bei einem Reboard-Sitz, möglich und nützlich im Sinne der Erfindung aber auch bei jedem anderen gattungsgemäßen Sicherheitssitz.

So kann der Sicherheitssitz 1 zur Befestigung eines Kindes 15 darin ein Rückhaltesystem 14, wie ein Gurtsystem oder einen Prallkörper, aufweisen. Die Ausgestaltung des Sicherheitssitzes kann ein- oder mehrteilig sein, wobei entsprechend geeignete Materialien, wie Metall, Kunststoff und Verbundmaterialien einsetzbar sind. Die Funktionsweisen ergeben sich bei jeglicher durch die Ansprüche vorgegebenen Kombination. Als Trageeinrichtung 19 können z. B. auch Riemen verwendet werden, die auch an der Sitzschale 18 befestigt werden können. Ein einteiliger oder starrer Sicherheitssitz kann durch entsprechende Formgebung ebenfalls eine Wippfunktion und/oder mehrere einstellbare Sitz- und/oder Liegepositionen ermöglichen, indem der gesamte Sitz eine Schaukelunterseite hat bzw. über geeignet ausgebildete Stützen, die evtl. auch längenverstellbar sein können, gekippt wird. Insbesondere kann die Unterseite des Sicherheitssitzes auch flach ausgebildet sein. Zweckmäßigerweise werden die vorhandenen Schwenkstützen 3 als Draht- oder Rohrbügel oder auch als Formteil z. B. aus Kunststoff oder Verbundmaterial eingesetzt, je nach dem, welche Funktionen und Belastungen sie zu erfüllen haben. Die Festlegung der Schwenkstützenformen unterliegt ebenfalls nur den Anwendungserfordernissen.

Der Sicherheitssitz kann ferner so ausgebildet sein, daß er mit einem Beckengurt, einem Dreipunkt-Statikgurt, einen Dreipunkt-Automatikgurt oder anderen Gurtsystemen alternativ oder ausschließlich an einem Fahrzeugsitz befestigt werden kann. Die Befestigungsmöglichkeiten und gestalterischen Formgebungen sind nur an die Funktion gebunden. Es ist daher auch möglich, den Kindersitz so auszubilden, daß er nur auf einem Vordersitz oder nur auf einer Rücksitzbank oder auf jeglichem Fahrzeugsitz montierbar ist.

In Abweichung von den gezeigten und beschriebenen Ausführungsbeispielen können mehrere Schwenkstützen auch an einer gemeinsamen Schwenkachse oder an mehr als zwei Schwenkachsen gelagert sein. Beispielsweise können der oder die Schwenkstützen 3 in Abhängigkeit von ihrer Belastung durch Federrastsperren, Rastscheiben mit radialer Zahnung, Keilscheiben oder Reibscheiben u. v. m. in Schwenkstellungen arretiert werden. Es können auch Vorspannfedern oder Haltefedern für die Schwenkstützen eingesetzt werden. Die Halteeinrichtungen für die Stützen 3 können ein Gegenlager am Sicherheitssitz 1, vorzugsweise ggf. am Tragegestell 17 enthalten, insbesondere in Form einer geeignet angebrachten Querstrebe des Tragegestells 17. Zusätzlich oder alternativ können die Halteeinrichtungen 13 für die Stützen 3 in zumindest einer Stellung fixierbare Feststelleinrichtungen 35 und bevorzugt in verschiedenen Stellungen fixierbare Rasteinrichtungen 36 oder insbesondere stufenlos fixierbare Klemmeinrichtungen 37 enthalten. Es kommt dabei nur darauf an, daß eine der jeweiligen Belastung entsprechend der Funktion eine ausreichende Fixierung gegenübersteht.

Die Verwendung des erfindungsgemäßen Kinder-Sicherheitssitzes für verschiedene Alters- und Gewichtsklassen vom Säugling bis hin zum Grundschüler hängt nur von der Dimensionierung und Gestaltung des Sitzes selbst ab, wobei nationale gesetzliche Auflagen zu berücksichtigen sind.

Der Umfang der Erfindung ist durch die in den Ansprüchen formulierten Merkmale bestimmt. Einzelheiten und bevorzugte Merkmale ergeben sich aus der Beschreibung und den dieser zu Grunde liegenden Figuren der Zeichnung.

### Bezugszeichenliste

- 1: Sicherheitssitz
- 2: Fahrzeugsitz
- 3: Schwenkstütze
- 4: Ruhestellung
- 5: Schwenkstellung
- 6: Klemmstütze
- 7: Hinterende von 1
- 8: Fahrzeugsitz-Sitzkissen
- 9: Fahrzeugsitz-Ruckenlehne
- 10: Zentrierstütze
- 11: Vorderende
- 12: vorderer Stirnbereich von 8
- 13: Halteeinrichtungen
- 14: Rückhaltesystem von 1
- 15: Kind
- 16: Reboard-Stellung
- 17: Tragegestell von 1
- 18: Sitzschale von 1
- 19: Trageeinrichtung von 1
- 20: Tragebügel von 19
- 21: Verstelleinrichtung
- 22: längeneinstellbare Schwenkstütze
- 23: Unterseite von 1
- 24: Auflagen an 23
- 25: Antirutschoberfläche von 24
- 26: Standkufen
- 27: Unterseite von 3
- 28: Antirutschoberfläche von 27
- 29: U-förmiger Bügel von 3
- 30,30': Schenkelenden von 29
- 31,31': Schwenkachse von 3 (6 bzw. 10)
- 32: ausziehbarer Aufsatz von 3
- 33: Gegenlager für 6
- 34: hintere Querstrebe von 17
- 35: fixierbare Feststelleinrichtungen von 3
- 36: fixierbare Rasteinrichtungen von 3
- 37: fixierbare Klemmeinrichtungen von 3
- 38: Gegenlager für 10
- 39: Gurtführung
- 40: Fahrzeuggurtsystem
- 41,41': U-Querschenkel von 6 bzw. 10
- 42: Arretiervorrichtung von 18
- 43, 43', 43'': Kontaktbereiche von 3 und 26
- 44: Schwenkrichtung von 6 nach 7
- 45, 45': U-Schenkel von 29
- 46: Innenflanken von 26
- 47: Automatikgurt von 40
- 48: Haltewangen von 17
- 49: Schwenkachse von 18
- 50: Umschlagrichtung von 1
- 51: Trennfuge zwischen 8 und 9
- 52: Längsrichtung von 10
- 53: Tasche von 32
- 54: Öffnungskante von 53
- 55: Vorderkante von 8
- 56: Überzug von 18
- 57: Einstellvorrichtung von 14
- 58: Beckenbefestigungen
- 59: Gurtklemme
- 60: Fahrzeugdreipunktgurt
- 61: Spielzeug
- 62: Täschchen an 17
- 63: Sonnenschutzdach
- 64: Sitzverkleinerer
- 65: Gurtpolster
- 66: Schloßpolster
- A bis N: Richtungspfeile

## Patentansprüche

1. An einem Fahrzeugsitz (2) montierbarer Kinder-Sicherheitssitz (1)
- mit mindestens einer Schwenkstütze (3), welche zwischen einer den Schwenkstützen-Schwenkweg sitzseitig begrenzenden Ruhestellung (4) und wenigstens einer Schwenkstellung (5) verschwenkbar ist und
- mit Halteeinrichtungen (13) zum Sperren der Schwenkstütze (3) gegen ein Verschwenken über die Schwenkstellung (5) hinaus,
dadurch gekennzeichnet,
daß die Schwenkstütze (3) in ihrer Schwenkstellung (5)
- als Klemmstütze (6) in eine Eingriffstellung zwischen Sitzkissen (8) und Rückenlehne (9) des Fahrzeugsitzes (2) einschiebbar und dadurch klemmfixierbar ist oder
- als Zentrierstütze (10) an die Stirnseite (12) des Fahrzeugsitz-Sitzkissens (8) anlegbar ist.

2. Sicherheitssitz nach Anspruch 1,
dadurch gekennzeichnet,
daß die Schwenkstütze (3) ein Draht- oder Rohrbügel ist.

3. Sicherheitssitz nach Anspruch 1 oder 2,
dadurch gekennzeichnet,
daß die Schwenkstütze (3) einen U-förmigen Bügel (29) enthält, dessen U-Schenkelenden (30, 30') am Sicherheitssitz (1), insbesondere an dessen Tragegestell (17), schwenkbar gelagert sind.

4. Sicherheitssitz nach einem oder mehreren der vorhergehenden Ansprüche,
dadurch gekennzeichnet,
daß die Schwenkstütze (3) in ihrer Ruhestellung (4) im wesentlichen innerhalb der Umrißform des Sicherheitssitzes (1) einliegt.

5. Sicherheitssitz nach einem oder mehreren der vorhergehenden Ansprüche,
dadurch gekennzeichnet,
daß die Schwenkstütze (3) in Richtung von ihrer Schwenkachse (31, 31') weg verlängerbar ist.

6. Sicherheitssitz nach Anspruch 5,
gekennzeichnet durch
einen an der Schwenkstütze (3) adaptierten, verstellbaren Aufsatz (32) zur Verlängerung der Schwenkstütze (3).

7. Sicherheitssitz nach Anspruch 6,
dadurch gekennzeichnet,
daß der Aufsatz (32) nach Art einer Tasche (53) ausgebildet mit seiner Öffnungskante (54) auf die Schwenkstütze (3) aufschiebbar und in unterschiedlichen Verlängerungsstellungen an der Schwenkstütze (3) fixierbar ist.

8. Sicherheitssitz nach einem oder mehreren der vorhergehenden Ansprüche,
gekennzeichnet durch
eine Klemmstütze (6) und eine Zentrierstütze (10).

9. Sicherheitssitz nach Anspruch 8,
dadurch gekennzeichnet,
daß die Klemmstütze (6) und die Zentrierstütze (10) als U-förmige Bügel (29) ausgebildet sind und in ihren Ruhestellungen (4) im wesentlichen aufeinander zu gerichtet sind.

10. Sicherheitssitz nach Anspruch 8,
dadurch gekennzeichnet,
daß die Klemmstütze (6) und die Zentrierstütze (10) als U-förmige Bügel (29) ausgebildet sind, deren Schwenkachsen zusammenfallen oder nahe beieinander liegen, so daß die beiden Schwenkstützen (6, 10) in ihren Ruhestellungen (4) im wesentlichen voneinander weg gerichtet sind.

11. Sicherheitssitz nach einem oder mehreren der vorhergehenden Ansprüche,
dadurch gekennzeichnet,
daß die Klemmstütze (6) bezüglich der Vorwärtsfahrtrichtung
- entweder in der hinteren Hälfte, insbesondere im Bereich des Hinterendes (7) des Sicherheitssitzes (1), schwenkbar befestigt ist und in Ruhestellung (4) von ihrer Schwenkachse (31) aus in Richtung des Vorderendes (11) des Sicherheitssitzes (1) weist
- oder in der vorderen Hälfte des Sicherheitssitzes (1) schwenkbar befestigt ist.

12. Sicherheitssitz nach Anspruch 11,
dadurch gekennzeichnet,
daß die in der vorderen Hälfte des Sicherheitssitzes (1) befestigte Klemmstütze (6) sich als ein U-förmiger Bügel im wesentlichen bis zum Hinterende (7) des Sicherheitssitzes (1) erstreckt und bevorzugt diesen und/oder das Fahrzeugsitz-Sitzkissen (8) dort umfaßt.

13. Sicherheitssitz nach einem oder mehreren der vorhergehenden Ansprüche,
dadurch gekennzeichnet,
daß die Zentrierstütze (10) bezüglich der Vorwärtsfahrtrichtung
- entweder in der vorderen Hälfte, insbesondere im Bereich des Vorderendes (11) des Sicherheitssitzes (1), schwenkbar befestigt ist und in Ruhestellung (4) von ihrer Schwenkachse (31') aus im wesentlichen zum Hinterende (7) des Sicherheitssitzes (1) weist
- oder in der hinteren Hälfte des Sicherheitssitzes (1) schwenkbar befestigt ist.

14. Sicherheitssitz nach Anspruch 13,
dadurch gekennzeichnet,
daß die in der hinteren Hälfte des Sicherheitssitzes (1) befestigte Zentrierstütze (10) sich als ein U-förmiger Bügel im wesentlichen bis zum Vorderende (11) des Sicherheitssitzes (1) erstreckt und bevorzugt diesen und/oder das Fahrzeug-Sitzkissen (8) dort umfaßt.

15. Sicherheitssitz nach einem oder mehreren der vorhergehenden Ansprüche,
gekennzeichnet durch
eine insbesondere quer zur Schwenkebene der Schwenkstütze (6,10) verlaufende Querstrebe (34,38) des Tragegestells (17) als Halteeinrichtung (13).

16. Sicherheitssitz nach einem oder mehreren der vorhergehenden Ansprüche,
gekennzeichnet durch
ein Tragegestell (17), an dem eine Sitzschale (18) in zumindest zwei, insbesondere fixierbare, Sitzpositionen schwenkbar gelagert ist.

17. Sicherheitssitz nach einem der Ansprüche 1-15,
gekennzeichnet durch
eine mit einem Tragegestell (17) zu einer integralen Einheit verbundene Sitzschale (18), wobei die integrale Einheit durch eine Verstelleinrichtung (3,21,22) in zumindest zwei Sitzpositionen fixierbar ist.

18. Sicherheitssitz nach Anspruch 17,
dadurch gekennzeichnet,
daß die Verstelleinrichtung (3,21,22) längeneinstellbar ist.

19. Sicherheitssitz nach einem oder mehreren der vorhergehenden Ansprüche,
dadurch gekennzeichnet,
daß er auf dem Fahrzeugsitz (2) in Reboard-Stellung (16) montierbar ist.

20. Sicherheitssitz nach einem oder mehreren der vorhergehenden Ansprüche,
gekennzeichnet durch
Gurtführungen (39) zur Aufnahme eines Fahrzeuggurtsystems (40).

21. Sicherheitssitz nach Anspruch 20,
dadurch gekennzeichnet,
daß die Gurtführungen (39) am Tragegestell (17) und/oder an der Sitzschale (18) angeordnet sind.

22. Sicherheitssitz nach einem oder mehreren der vorhergehenden Ansprüche,
gekennzeichnet durch
an der Unterseite (22) angeordnete, bogenartig gewölbte Standkufen (26), welche konvexseitig einer Unterlage zugewandt sind.

23. Sicherheitssitz nach einem oder mehreren der vorhergehenden Ansprüche,
dadurch gekennzeichnet,
daß die Standkufen (26) und/oder die Schwenkstütze (3), insbesondere deren Unterseite (27), mit einer Antirutschoberfläche (25, 28) versehen sind.

24. Sicherheitssitz nach einem oder mehreren der vorhergehenden Ansprüche,
dadurch gekennzeichnet,
daß eine Trageeinrichtung (19) vorgesehen ist, die einen schwenkbar an dem Sicherheitssitz (1) oder an dem Tragegestell (17) angebrachten Tragebügel (20) enthält.

## Claims

1. Child safety seat (1) which can be fitted on a vehicle seat (2).
- having at least one swivelling support (3), which can be swivelled between an inoperative position (4) limiting the swivelling-support swivelling path on the seat side, and at least one swivelling position (5), and
- having retaining devices (13) for preventing the swivelling support (3) from swivelling beyond the swivelling position (5),
characterized in that in a first swivelling position (5) the swivelling support (3) or supports can be inserted and fixed by clamping between the seat cushion (8) and backrest (9) of the vehicle seat (2) as a clamping support (6); and
in a second swivelling position (5) can be put against the front end (12) of the vehicle-seat seat cushion (8) as a centring support (10).

2. Safety seat according to Claim 1, characterized in that the swivelling support (3) is a wire or tubular bow.

3. Safety seat according to Claim 1 or 2, characterized in that the swivelling support (3) comprises a U-shaped bow (29), the U-limb ends (30, 30') of which are swivel-mounted on the safety seat (1), in particular on its supporting frame (17).

4. Safety seat according to one or more of the preceding claims, characterized in that in its inoperative position (4) the swivelling support (3) is essentially enclosed within the contour shape of the safety seat (1).

5. Safety seat according to one or more of the preceding claims, characterized in that the swivelling support (3) can be extended in the direction away from its swivelling pin (31, 31').

6. Safety seat according to Claim 5, characterized by an adjustable attachment (32) which is adapted to the swivelling support (3) and is intended for extending the swivelling support (3).

7. Safety seat according to Claim 6, characterized in that the attachment (32), which is designed in the manner of a pouch (53), can be pushed by its opening edge (54) onto the swivelling support (3) and can be fixed in different extension positions on the swivelling support (3).

8. Safety seat according to one or more of the preceding claims, characterized by a clamping support (6) and a centring support (10).

9. Safety seat according to Claim 8, characterized in that the clamping support (6) and the centring support (10) are designed as U-shaped bows (29) and in their inoperative positions (4) are essentially directed towards one another.

10. Safety seat according to Claim 8, characterized in that the clamping support (6) and the centring support (10) are designed as U-shaped bows (29), the swivelling axes of which coincide or are situated near to one another, with the result that the two swivelling supports (6, 10) are essentially directed away from one another in their inoperative positions (4).

11. Safety seat according to one or more of the preceding claims, characterized in that the clamping support (6), with respect to the forward direction of travel,
- is either fastened in the manner which allows it to swivel in the rear half, in particular in the region of the rear end (7) of the safety seat (1), and in the inoperative position (4) points away from its swivelling pin (31) in the direction of the front end (11) of the safety seat (1),
- or is fastened in a manner which allows it to swivel in the front half of the safety seat (1).

12. Safety seat according to Claim 11, characterized in that the clamping support (6), fastened in the front half of the safety seat (1), extends as a U-shaped bow essentially as far as the rear end (7) of the safety seat (1) and there preferably surrounds the latter and/or the vehicle-seat seat cushion (8).

13. Safety seat according to one or more of the preceding claims, characterized in that the centring support (10), with respect to the forward direction of travel,
- is either fastened in a manner which allows it to swivel in the front half, in particular in the region of the front end (11) of the safety seat (1), and in the inoperative position (4) points away from its swivelling pin (31') essentially to the rear end (7) of the safety seat (1),
- or is fastened in a manner which allows it to swivel in the rear half of the safety seat (1).

14. Safety seat according to Claim 13, characterized in that the centring support (10), fastened in the rear half of the safety seat (1), extends as a U-shaped bow essentially as far as the front end (11) of the safety seat (1) and there preferably surrounds the latter and/or the vehicle seat cushion (8).

15. Safety seat according to one or more of the preceding claims, characterized by a transverse strut (34, 38) of the supporting frame (17), which transverse strut runs in particular transversely with respect to the swivelling plane of the swivelling support (6, 10), as a retaining device (13).

16. Safety seat according to one or more of the preceding claims, characterized by a supporting frame (17) on which a seat shell (18) is mounted in a manner which allows it to swivel into at least two, in particular fixable, seat positions.

17. Safety seat according to one of Claims 1-15, characterized by a seat shell (18) which is connected to a supporting frame (17) to form an integral unit, it being possible for the integral unit to be fixed in at least two seat positions by an adjusting device (3, 21, 22).

18. Safety seat according to Claim 17, characterized in that the adjusting device (3, 21, 22) can be adjusted in length.

19. Safety seat according to one or more of the preceding claims, characterized in that it can be fitted on the vehicle seat (2) in the reboard position (16).

20. Safety seat according to one or more of the preceding claims, characterized by belt guides (39) for receiving a vehicle-belt system (40).

21. Safety seat according to Claim 20, characterized in that the belt guides (39) are arranged on the supporting frame (17) and/or on the seat shell (18).

22. Safety seat according to one or more of the preceding claims, characterized by arcuately curved standing runners (26) which are arranged on the underside (22) and on the convex side face towards an underlying surface.

23. Safety seat according to one or more of the preceding claims, characterized in that the standing runners (26) and/or the swivelling support (3), in particular the underside (27) thereof, are provided with an anti-slip surface (25, 28).

24. Safety seat according to one or more of the preceding claims, characterized in that a supporting device (19) is provided, which supporting device contains a supporting bow (20) which is fitted in a manner which allows it to swivel, on the safety seat (1) or on the supporting frame (17).

## Revendications

1. Siège de sécurité pour enfant (1) pouvant être monté sur un siège de véhicule (2),comportant
- au moins un appui pivotant (3), qui peut pivoter entre une position de repos (4) délimitant côté siège la course de pivotement de l'appui pivotant et au moins une position pivotée (5), et
- des dispositifs de maintien (13) destinés à bloquer l'appui pivotant (3) contre tout pivotement dépassant la position pivotée (5), caractérisé en ce qu'au moins un appui pivotant (3) est susceptible d'être inséré et bloqué par serrage dans une première position pivotée (5), à titre d'appui de serrage (6) entre le coussin de siège (8) et le dossier (9) du siège de véhicule (2); et
- est susceptible d'être appliqué dans une deuxième position pivotée (5) à titre d'appui de centrage (10) sur la face frontale (12) du coussin de siège (8) du siège de véhicule.

2. Siège de sécurité selon la revendication 1, caractérisé en ce que l'appui pivotant (3) est un étrier en fil métallique ou tubulaire.

3. Siège de sécurité selon la revendication 1 ou 2, caractérisé en ce que l'appui pivotant (3) contient un étrier (29) en forme de U, dont les extrémités des branches du U (30, 30') sont montées de façon à pouvoir pivoter sur le siège de sécurité (1), en particulier sur son bâti support (17).

4. Siège de sécurité selon l'une ou plusieurs des revendications précédentes, caractérisé en ce que l'appui pivotant (3), lorsqu'il se trouve dans sa position de repos (4), s' insère sensiblement à l'intérieur de la forme du contour du siège de sécurité (1).

5. Siège de sécurité selon l'une ou plusieurs des revendications précédentes, caractérisé en ce que l'appui pivotant (3) est susceptible d'être prolongé dans la direction d'écartement vis-à-vis de son axe de pivotement (31, 31').

6. Siège de sécurité selon la revendication 5, caractérisé par un élément rapporté (32), réglable, adapté à l'appui pivotant (3), et destiné à prolonger l'appui pivotant (3).

7. Siège de sécurité selon la revendication 6, caractérisé en ce que l'élément rapporté (32) est réalisé à la façon d'une poche (53), son arête d'ouverture (54) pouvant être enfilée sur l'appui pivotant (3) et être fixée dans différentes positions de prolongement sur l'appui pivotant (3).

8. Siège de sécurité selon l'une ou plusieurs des revendications précédentes, caractérisé par un appui de serrage (6) et un appui de centrage (10).

9. Siège de sécurité selon la revendication 8, caractérisé en ce que l'appui de serrage (6) et l'appui de centrage (10) sont réalisés sous la forme d'étriers en forme de U (29) et sont sensiblement orientés l'un vers l'autre dans leur position de repos (4).

10. Siège de sécurité selon la revendication 8, caractérisé en ce que l'appui de serrage (6) et l'appui de centrage (10) sont réalisés sous la forme d'étriers en forme de U (29) dont les axes de pivotement coïncident ou sont situés près l'un de l'autre, si bien que les deux appuis pivotants (6, 10), lorsqu'ils sont dans leurs positions de repos (4), sont orientés en s'écartant sensiblement l'un de l'autre.

11. Siège de sécurité selon l'une ou plusieurs des revendications précédentes, caractérisé en ce que l'appui de serrage (6), par rapport à la direction de roulage avant,
- soit est fixé de façon à pouvoir pivoter soit dans la moitié arrière, en particulier dans la zone de l'extrémité arrière (7) du siège de sécurité (1), et, dans la position de repos (4), est tourné depuis son axe de pivotement (31) dans la direction de l'extrémité avant (11) du siège de sécurité (1),
- soit est fixé de façon à pouvoir pivoter dans la moitié avant du siège de sécurité (1).

12. Siège de sécurité selon la revendication 11, caractérisé en ce que l'appui de serrage (6) fixé dans la moitié avant du siège de sécurité (1) s'étend sous la forme d'un étrier en forme de U, sensiblement Jusqu'à l'extrémité arrière (7) du siège de sécurité (1) et entoure à cet endroit de préférence celui-ci et/ou le coussin de siège (8) du siège de véhicule.

13. Siège de sécurité selon l'une ou plusieurs des revendications précédentes, caractérisé en ce que l'appui de centrage (10), par rapport à la direction de roulage avant,
- soit est fixé de façon à pouvoir pivoter dans la moitié avant, en particulier dans la zone de l'extrémité avant (11) du siège de sécurité (1), et, dans la position de repos (4), est tourné depuis son axe de pivotement (31') sensiblement vers l'extrémité arrière (7) du siège de sécurité (1),
- soit est fixé de façon à pouvoir pivoter dans la moitié avant du siège de sécurité (1).

14. Siège de sécurité selon la revendication 13, caractérisé en ce que l'appui de centrage (10), fixé dans la moitié arrière du siège de sécurité (1), s'étend sous la forme d'un étrier en forme de U, sensiblement jusqu'à l'extrémité avant (11) du siège de sécurité (1), et, de préférence, entoure à cet endroit celle-ci et/ou le coussin de siège (8) du véhicule.

15. Siège de sécurité selon l'une ou plusieurs des revendications précédentes, caractérisé par une entretoise transversaie (34, 38), s'étendant en particulier transversalement par rapport au plan de pivotement de l'appui pivotant (6, 10) et appartenant au bâti support (17), à titre de dispositif de maintien (13).

16. Siège de sécurité selon l'une ou plusieurs des revendications précédentes, caractérisé par un bâti support (17), sur lequel une coque de siège (18) est montée de façon à pouvoir pivoter en au moins deux positions d'assise, en particulier pouvant être fixée.

17. Siège de sécurité selon l'une des revendications 1-15, caractérisé par une coque de siège (18) reliée à un bâti support (17) pour former un ensemble intégral, l'ensemble intégral étant susceptible d'être fixé en au moins deux positions d'assise au moyen d'un dispositif de réglage (3, 21, 22).

18. Siège de sécurité selon la revendication 17, caractérisé en ce que le dispositif de réglage (3, 21, 22) est réglable en longueur.

19. Siège de sécurité selon l'une ou plusieurs des revendications précédentes, caractérisé en ce qu'il peut être monté sur le siège de véhicule (2) en position de reboard.

20. Siège de sécurité selon l'une ou plusieurs des revendications précédentes, caractérisé par des guidages de ceinture (39) destines a recevoir un système de ceinture de véhicule (40).

21. Siège de sécurité selon la revendication 20, caractérisé en ce que les guidages de ceinture (39) sont disposés sur le bâti support (17) et/ou sur la coque de siège (18).

22. Siège de sécurité selon l'une ou plusieurs des revendications précédentes, caractérisé par des barres de pose (26) incurvées en forme d'arc, disposées sur la face inférieure (22) et tournée du côté convexe d'un support.

23. Siège de sécurité selon l'une ou plusieurs des revendications précédentes, caractérisé en ce que les barres de pose (26) et/ou l'appui pivotant (3), en particulier sa face inférieure (27), sont pourvus d'une surface anti-ripage (25, 28).

24. Siège de sécurité selon l'une ou plusieurs des revendications précédentes, caractérisé en ce qu'est prévu un dispositif support (19), qui contient un étrier support (20) monté de façon à pouvoir pivoter sur le siège de sécurité (1) ou sur le bâti support (17).
